# EUROPÄISCHE PATENTSCHRIFT

(11) **EP 2 493 995 B1**
(45) Veröffentlichungstag und Bekanntmachung des Hinweises auf die Patenterteilung: **17.12.2014**
(21) Anmeldenummer: 10766023.5
(22) Anmeldetag: 08.10.2010
(51) Int. Cl.: C09J 5/06

(54) **VERFAHREN ZUM VERKLEBEN VON HITZEAKTIVIERT VERKLEBBAREN FLÄCHENELEMENTEN**
METHOD FOR GLUING HEAT-ACTIVATED GLUEABLE SURFACE ELEMENTS
PROCÉDÉ POUR COLLER DES ÉLÉMENTS PLANS THERMOCOLLABLES

(30) Priorität: 30.10.2009 DE 102009046256
(43) Veröffentlichungstag der Anmeldung: 05.09.2012
(73) Patentinhaber: Tesa SE, 20253 Hamburg (DE)
(72) Erfinder: STAIGER, Anja, 22459 Hamburg (DE); KEITE-TELGENBÜSCHER, Klaus, 22529 Hamburg (DE); GRÜNAUER, Judith, 22117 Hamburg (DE); ENGELDINGER, Hans Karl, 25451 Quickborn (DE)
(86) Internationale Anmeldenummer: PCT/EP2010/065073
(87) Internationale Veröffentlichungsnummer: WO 2011/051097

(56) Entgegenhaltungen:
- WO-A1-2008/139994
- JP-A- 57 073 064
- US-A1- 2005 103 430

## Beschreibung

Die Erfindung betrifft ein Verfahren zum Verkleben eines hitzeaktiviert verklebbaren Flächenelements mit einem elektrisch nicht leitenden Verklebungssubstrat, das einen Wärmeleitungskoeffizienten von höchstens 5 W/mK aufweist, das Verfahren umfassend die Schritte eines Bereitstellens eines hitzeaktiviert verklebbaren Flächenelements mit zumindest einer elektrisch leitenden Schicht und zumindest einer hitzeaktiviert verklebenden Klebemassenschicht, dessen Form auf die Form der Verklebungsfläche zugeschnitten ist, eines In-Kontakt-Bringens des Verklebungssubstrats mit einem Seitenflächenabschnitt des hitzeaktiviert verklebbaren Flächenelements, wodurch ein Vorverbund gebildet wird, und eines induktiven Erwärmens des Vorverbunds in einem Magnet-Wechselfeld einer Frequenz von mindestens 100 Hz und höchstens 200 kHz für eine Dauer von höchstens 20 s, wodurch ein Endverbund gebildet wird.

Hitzeaktiviert verklebbare Flächenelemente (hitzeaktivierbare Flächenelemente) werden eingesetzt, um hochfeste Verbindungen von Fügeteilen zu erhalten. Insbesondere eignen sich derartige Flächenelemente, um bei einer geringeren Dicke der Klebefuge vergleichbare oder höhere Festigkeiten zu erreichen als dies mit Flächenelementen möglich ist, die ausschließlich Haftklebemassensysteme enthalten. Derartige hochfeste Verklebungen sind insbesondere bei der voranschreitenden Miniaturisierung von elektronischen Geräten von Bedeutung, etwa im Bereich der Konsumgüterelektronik, der Unterhaltungselektronik oder der Kommunikationselektronik, zum Beispiel für Mobiltelefone, PDAs, Laptops und andere Rechner, Digitalkameras und Anzeigegeräte wie etwa Displays und Digitalreader.

In besonderem Maße steigen die Anforderungen an die Verarbeitbarkeit und Stabilität von Klebeverbindungen bei tragbaren Konsumgüterelektronikartikeln. Dies liegt zum einen daran, dass die Abmessungen solcher Artikel immer geringer werden, so dass sich auch die für eine Klebeverbindung nutzbare Fläche verringert. Zum anderen muss eine Klebeverbindung in derartigen Geräten besonders stabil sein, da tragbare Artikel starken mechanischen Belastungen wie etwa Stößen oder Stürzen standhalten müssen und zudem in einem breiten Temperaturbereich eingesetzt werden sollen.

Daher werden in derartigen Produkten bevorzugt hitzeaktiviert verklebbare Flächenelemente eingesetzt, die hitzeaktiviert verklebende Klebemassen aufweisen, also Klebemassen, die bei Raumtemperatur keine oder eine allenfalls geringe Eigenklebrigkeit aufweisen, unter Einwirkung von Hitze aber die für eine Verklebung erforderliche Klebkraft zu den jeweiligen Verklebungssubstraten (Fügepartnern, Haftgrund) aufbauen. Solche hitzeaktiviert verklebenden Klebemassen liegen bei Raumtemperatur häufig in fester Form vor, werden während des Verklebens aber durch Temperatureinwirkung entweder reversibel oder irreversibel in einen Zustand hoher Klebkraft überführt. Reversibel hitzeaktiviert verklebende Klebemassen sind zum Beispiel Klebemassen auf der Basis thermoplastischer Polymere, wohingegen irreversibel hitzeaktiviert verklebende Klebemassen etwa Reaktivklebemassen sind, in denen infolge einer thermischen Aktivierung chemische Reaktionen wie beispielsweise Vernetzungsreaktionen ablaufen, wodurch diese Klebemassen besonders für permanente hochfeste Verklebungen geeignet sind.

Allen hitzeaktiviert verklebenden Klebemassensystemen ist gemeinsam, dass diese beim Verkleben erhitzt werden müssen. Insbesondere bei Verklebungen, bei denen die Klebemassensysteme nach außen hin von den Verklebungssubstraten vollflächig abgedeckt sind, ist es besonders wichtig, die zum Aufschmelzen oder zur Aktivierung der Klebemasse erforderliche Wärme schnell zu der Verklebungsfläche hin zu transportieren. Ist dabei eines der Verklebungssubstrate ein guter Wärmeleiter, so ist es möglich, dieses Verklebungssubstrat durch eine externe Wärmequelle zu erwärmen, beispielsweise durch einen direkten Wärmeübertrager, eine Infrarotheizung oder dergleichen.

Die für eine schnelle homogene Erwärmung der Klebemasse erforderliche kurze Aufheizzeit lässt sich im Falle eines solchen direkten Erhitzens oder Kontakterhitzens allerdings nur für einen großen Temperaturgradienten zwischen der Wärmequelle und dem Verklebungssubstrat realisieren. Daher sollte das zu erwärmende Verklebungssubstrat selber gegenüber Temperaturen unempfindlich sein, die zum Teil sogar erheblich höher ausfallen können als es das Aufschmelzen oder Aktivieren der Klebemasse eigentlich erfordern würde.

Anders ist die Situation jedoch, wenn keines der Verklebungssubstrate die Wärme hinreichend gut leitet oder wenn die Verklebungssubstrate gegenüber höheren Temperaturen empfindlich sind, wie dies zum Beispiel bei vielen Kunststoffen der Fall ist, aber auch bei elektronischen Bauteilen wie etwa Halbleiterbauteilen oder Flüssigkristallmodulen. Zur Verklebung von Verklebungssubstraten aus wenig wärmeleitenden oder wärmeempfindlichen Materialien bietet es sich daher an, das hitzeaktiviert verklebbare Flächenelement selbst mit einem intrinsischen Mechanismus zum Heizen auszurüsten, so dass die zum Verkleben erforderliche Wärme nicht von außen eingebracht werden muss, sondern direkt im Innern des Flächenelements selber erzeugt wird. Aus dem Stand der Technik sind unterschiedliche Mechanismen bekannt, mittels derer sich ein derartiges internes Erwärmen realisieren lässt, etwa als Erwärmen mittels einer elektrischen Widerstandsheizung, durch magnetische Induktion oder infolge einer Wechselwirkung mit Mikrowellenstrahlung.

Die zwei letztgenannten Verfahren bieten im Hinblick auf den Ablauf einer Verklebung und die praktisch-technische Ausgestaltung der externen Erhitzungsvorrichtung, die mit dem wärmeerzeugenden Bereich des Flächenelements in Wechselwirkung tritt und so eine Erwärmung des Flächenelements bewirkt, den Vorteil, dass das Erwärmen des Flächenelements keinen direkten und unmittelbaren Kontakt des Flächenelements mit der externen Erhitzungsvorrichtung erfordert, es kann vielmehr sogar berührungsfrei durchgeführt werden. Insbesondere hat sich dabei ein Erwärmen durch magnetische Induktion als praktisch herausgestellt, da eine nach dem Induktionsprinzip arbeitende Erhitzungsvorrichtung apparativ erheblich einfacher zu konstruieren ist als ein Mikrowellenemitter.

Unterschiedliche Effekte können zur Erwärmung im Magnet-Wechselfeld beitragen: Besitzt der Körper, der zum Erwärmen in das Wechselfeld eingebracht wird, elektrisch leitende Bereiche, so werden durch das Magnet-Wechselfeld in diesen Bereichen Wirbelströme induziert. Weisen die Bereiche dabei einen von Null verschiedenen elektrischen Widerstand auf, so resultieren die dabei auftretenden Wirbelstrom-Leitungsverluste im Auftreten von Joulescher Wärme (Stromwärme). Damit sich derartige Wirbelströme überhaupt ausbilden können, müssen die elektrisch leitfähigen Bereiche allerdings eine Mindestgröße besitzen; diese ist um so größer, je geringer die Frequenz des von außen angelegten Magnet-Wechselfeldes ist.

Besitzt der Körper, der zum Erwärmen in das Wechselfeld eingebracht wird, jedoch ferromagnetische Bereiche, so richten sich die Elementarmagnete dieser Bereiche jeweils parallel zum äußeren Magnet-Wechselfeld aus. Die während der Änderung des äußeren Magnetfelds auftretenden Hystereseverluste (Ummagnetisierungsverluste) haben ebenfalls eine Erwärmung des Körpers zur Folge. Je nach dem Material des in das Magnet-Wechselfeld eingebrachten Körpers können beide Effekte gemeinsam zur Erwärmung des Körpers beitragen (etwa bei ferromagnetischen Metallen wie Eisen, Nickel und Kobalt oder bei ferromagnetischen Legierungen wie Mu-Metall und Alnico) oder aber jeweils nur einer dieser beiden Effekte zum Erwärmen beitragen (etwa nur Wirbelströme bei nicht-ferromagnetischen Metallen wie Aluminium oder nur Hysterese bei elektrisch wenig leitenden Materialien wie Eisenoxidpartikeln).

In der Fertigungstechnik sind seit einigen Jahrzehnten bereits Vorrichtungen und Verfahren auf der Grundlage der induktiven Erwärmung bekannt, mittels derer Polymersysteme erhitzt werden können, beispielsweise zum Verkleben von Fügeteilen, zum Versiegeln von fertigungsbedingten Nähten sowie zum Härten oder Anlassen von Polymeren. Dabei enthalten die Erhitzungsvorrichtungen üblicherweise Induktoren zum Erzeugen des Magnet-Wechselfeldes, die den zu erwärmenden Körper jeweils komplett oder teilweise umgeben und diesen entlang seines gesamten Umfangs gleichmäßig erwärmen. Hierbei lässt sich bei Bedarf natürlich auch ein gezielt ungleichmäßiges Erhitzen realisieren. In der Praxis werden hierfür beispielweise häufig tunnelförmige Induktionsspulen eingesetzt, da bei dieser geometrischen Anordnung das Magnet-Wechselfeld der Induktionsspule nicht nur aus einer Richtung einwirkt. sondern zusätzlich auch von der Seite auf den zu erhitzenden Körper.

Werden hitzeaktiviert verklebbare Flächenelemente durch induktives Erwärmen thermisch aktiviert, so werden dafür in der Regel Flächenelemente eingesetzt, die als Heißklebemasse eine hitzeaktiviert verklebende Klebemasse enthalten, die an den Seitenflächen einer elektrisch leitenden Schicht angeordnet ist, etwa einer Flächenstruktur mit einer Folie aus einem Metall oder einem metallierten Polymer, einer durchbrochenen Metallfolie, einem Drahtnetz, einem flächig ausgebreiteten Streckmetall, einem Metallvlies oder Metallfasern. Die letzteren diskontinuierlichen Flächenstrukturen bieten dabei den Vorteil, dass die Heißklebemasse durch die Öffnungen in der jeweiligen Flächenstruktur hindurchtreten kann und dadurch den inneren Zusammenhalt des Flächenelements insgesamt verbessert, was dann allerdings auf Kosten einer Abnahme der Effizienz der Erwärmung geschieht.

Einer der Nachteile der bislang bekannten Verfahren besteht darin, dass hierbei nicht bloß der konkret zu erhitzende Bereich des jeweiligen Körpers dem Magnet-Wechselfeld ausgesetzt wird, sondern stets ein erheblich größerer Bereich des Körpers; dies ist besonders bei einer Anordnung erkennbar, in der der zu erwärmende Körper vollständig in eine tunnelförmige Induktionsspule eingebracht und somit auch vollständig dem Magnet-Wechselfeld ausgesetzt wird. Daher können derartige herkömmliche Verfahren zum induktiven Erwärmen nur zum Verkleben von solchen Verklebungssubstraten zum Einsatz gelangen, bei denen eine thermische oder elektrische Beschädigung der unerwünschterweise dem Magnet-Wechselfeld ausgesetzten Bereiche ausgeschlossen ist. Dies hat allerdings zur Folge, dass die bislang bekannten Verfahren zum Verkleben von Baueinheiten in elektronischen Geräten in der Regel nicht verwendet werden können, da viele der elektronischen Bauteile wie etwa Halbleiterbauelemente oder Displaymodule nur bedingt hitzeresistent sind und daher beim Erwärmen beschädigt werden können, zumal diese Baueinheiten häufig auch selber elektrisch leitende Bereiche enthalten, so dass eine induktive Erwärmung auch innerhalb dieser Baueinheiten auftritt.

In den letzten Jahren ist das induktive Erwärmen beim Verkleben erneut in das Zentrum der Aufmerksamkeit gerückt. Der Grund hierfür ist den nunmehr verfügbaren nanopartikulären Systemen wie zum Beispiel MagSilica™ (Evonik AG) zu suchen, die in das Material des zu erwärmenden Körper eingearbeitet werden können und so ein Erwärmen des Körpers über sein gesamtes Volumen ermöglichen, ohne dass dessen mechanische Stabilität dadurch in nennenswerter Weise beeinträchtigt wird. So ist beispielsweise für Verklebungen in mobilen elektronischen Geräten von der Firma Lohmann ein Produkt unter der Bezeichnung Duplocoll RCD™ erhältlich, das induktiv erwärmbare Nanopartikel enthält.

Aufgrund der geringen Größe dieser nanoskopischen Systeme ist es jedoch nicht möglich, derartige Produkte in Magnet-Wechselfeldern mit Frequenzen aus dem Mittelfrequenzbereich effizient zu erwärmen. Vielmehr sind für die neuartigen Systeme Frequenzen aus dem Hochfrequenzbereich erforderlich. Grade bei diesen Frequenzen tritt jedoch das Problem einer Beschädigung von elektronischen Bauteilen im Magnet-Wechselfeld besonders stark zutage. Die Erzeugung von Magnet-Wechselfeldern mit Frequenzen im Hochfrequenzbereich erfordert überdies einen erhöhten apparativen Aufwand und ist somit ökonomisch ungünstig. Zudem ist die Verwendung von nanopartikulären Füllstoffen auch in ökologischer Hinsicht problematisch, da sich diese bei einem späteren Recycling kaum von den umgebenden Materialien abtrennen lassen.

Die JP 57 073064 A beschreibt ein Verfahren zum Verkleben eines Flächenelementes aus einer Aluminiumschicht und zwei hitzeaktiviert verklebbaren thermoplastichen Klebeschichten. In dem Verfahren werden Formteile mit der Klebeschicht in Kontakt gebracht und anschließend unter Druck in einem elektromagnetischen Wechselfeld induktiv verklebt. In der Schrift ist kein Pressdruck von mindestens 1 MPa offenbart, und für die induktive Erwärmung ist keine bestimmte Frequenz vorgegeben.

Grundsätzlich sind verschiedene Erhitzungsvorrichtungen für eine induktive Erwärmung bekannt; diese lassen sich unter anderem nach den Frequenzen unterscheiden, die das mit der jeweiligen Erhitzungsvorrichtung erzeugte Magnet-Wechselfeld besitzt. So kann eine Induktionserwärmung unter Verwendung eines Magnetfeldes erfolgen, dessen Frequenz im Frequenzbereich von etwa 100 Hz bis etwa 200 kHz liegt (den so genannten Mittelfrequenzen; MF) oder auch im Frequenzbereich von etwa 300 kHz bis etwa 100 MHz liegt (den so genannten Hochfrequenzen; HF). Darüber hinaus sind als Sonderfall auch Erhitzungsvorrichtungen bekannt, deren Magnetfeld eine Frequenz aus dem Bereich der Mikrowellen besitzt, beispielsweise die Mikrowellen-Standardfrequenz von 2,45 GHz.

Mit der Frequenz des eingesetzten Wechselfeldes steigt der technische Aufwand, der betrieben werden muss, um das Wechselfeld zu erzeugen, und damit die Kosten für die Erhitzungsvorrichtung. Während Mittelfrequenzanlagen derzeit bereits zu einem Marktpreis von etwa 5.000 Euro erhältlich sind, sind für Hochfrequenzanlagen mindestens 25.000 Euro zu berücksichtigen. Darüber hinaus steigen auch die Sicherheitsanforderungen an die Erwärmungsanlage mit der Frequenz, so dass bei Hochfrequenzanlagen zusätzlich zu den höheren Anschaffungskosten regelmäßig auch höhere Kosten für die Installation einer solchen Anlagentechnik anfallen.

In Anbetracht der damit verbundenen höheren Kosten und des größeren Risikos einer Beschädigung beim Verkleben elektronischer Bauteile sowie im Hinblick auf die schlechtere Rezyklierbarkeit sind die nanopartikulären Systeme demnach nicht sonderlich geeignet, um als Bestandteil hitzeaktiviert verklebbarer Flächenelemente für ein induktives Erhitzen zum schonenden Verkleben eingesetzt zu werden. Um dieses Ziel zu erreichen werden bevorzugt Magnet-Wechselfelder mit Frequenzen aus dem Mittelfrequenzbereich eingesetzt.

Die US 2005/103430 zeigt ein Verfahren zum Verkleben eines hitzeaktiviert verklebbaren Flächenelements bestehend aus einer Aluminiumschicht und zwei unter Einwirkung von Wärme verklebenden Klebemassenschichten mit einem Celluloseacetatfilm, wobei zunächst ein Vorverbund gebildet wird, welcher anschließend in einem Magnet-Wechselfeld in einen Endverbund umgewandelt wird. Es wird kein Pressdruck von mindestens 1 MPa beaufschlagt, und es ist keine bestimmte Zeit für die induktive Erwärmung festgelegt.

Jedoch auch bei Erhitzungsvorrichtungen, die mit Magnet-Wechselfeldern mit Frequenzen aus dem Mittelfrequenzbereich arbeiten, hat es sich als schwierig herausgestellt, ein schonendes Verkleben zu realisieren. Um die für industrielle Fertigungsprozesse erforderlichen hohen Verarbeitungsgeschwindigkeiten zu erhalten, darf die Erwärmungsdauer der hitzeaktiviert verklebbaren Flächenelemente nur sehr kurz sein. Zum Erreichen der erforderlichen Verklebungstemperaturen ist es daher erforderlich, die Aufheizgeschwindigkeit sehr hoch zu wählen.

Wird das hitzeaktiviert verklebbare Flächenelement jedoch auf einem Verklebungssubstrat verklebt, das eine nur geringe Wärmeleitfähigkeit aufweist, das heißt eine Wärmeleitfähigkeit von höchstens 5 W/mK, so kann die induktiv im Flächenelement erzeugte Wärme von diesem nicht schnell genug abgeleitet werden. Die Wärme verbleibt vielmehr zunächst für einige Zeit in der Verklebungsfläche, wodurch es dort zu einem Wärmestau kommt. Infolge dessen kann das Flächenelement wie auch das Verklebungssubstrat (etwa elektronische Bauteile) lokal überhitzt und dadurch beschädigt werden. Diese Gefahr einer Überhitzung ist noch größer, wenn das Verklebungssubstrat zusätzlich zu einer nur geringen Wärmeleitfähigkeit ebenfalls eine nur geringe Wärmekapazität besitzt, da somit auch die Möglichkeit einer temporären Wärmespeicherung nicht gegeben ist.

Beides ist zum Beispiel bei Verklebungssubstraten der Fall, die an der Verklebungsfläche Polymere aufweisen. Polymere besitzen aufgrund der kleineren freien Weglänge der Phononen eine geringere Wärmeleitfähigkeit als Metalle und weisen zudem aufgrund der in Polymerketten geringeren Anzahl an Freiheitsgraden eine nur kleine Wärmekapazität auf. Hinzu kommt, dass die thermische Beständigkeit von Polymeren häufig geringer ist als die anderer Substratmaterialien wie zum Beispiel von Metallen oder Gläsern.

Hierbei ist es natürlich um so problematischer, wenn nicht nur das Verklebungssubstrat, sondern darüber hinaus auch die weiteren Bestandteile des Flächenelements (etwa der Träger oder weitere Funktionsschichten) aus derartigen Materialien mit geringer Wärmeleitfähigkeit und Wärmekapazität bestehen, da dann eine Wärmeabfuhr oder Wärmespeicherung nicht einmal über das Flächenelement erfolgen kann.

So existiert derzeit kein allgemein anwendbares Verklebungsverfahren, mit dem sich Verklebungssubstrate über hitzeaktiviert verklebbare Flächenelemente in hohen Taktraten schonend verbinden lassen, indem die Flächenelemente einem Magnet-Wechselfeld einer Frequenz aus dem Mittelfrequenzbereich ausgesetzt werden. Vielmehr wird bei einer induktiven Erwärmung grade dann eine thermische Beschädigung des Flächenelements oder eines Verklebungssubstrats beobachtet, wenn das Verklebungssubstrat eine polymere Verklebungsfläche aufweist, insbesondere dann, wenn es sich dabei um ein elektronisches Bauteil handelt.

Die Aufgabe der vorliegenden Erfindung bestand darin, ein Verfahren zur Verfügung zu stellen, mit dem sich unter Vermeidung der Nachteile des Stands der Technik kleinflächige Verklebungen auf Verklebungssubstraten realisieren lassen, die den elektrischen Strom nicht leiten und einen geringen Wärmeleitungskoeffizienten aufweisen. Dieses Verfahren muss zudem auch zur Verklebung von Baueinheiten elektronischer Geräte mit hohen Taktraten geeignet sein, insbesondere zum Verkleben von Verklebungssubstraten aus Polymeren.

Diese Aufgabe wird erfindungsgemäß durch ein Verfahren der eingangs genannten Art gelöst, bei dem der Vorverbund gleichzeitig mit dem induktiven Erwärmen senkrecht zu einem Seitenflächenabschnitt des hitzeaktiviert verklebbaren Flächenelements mit einem Druck (Pressdruck) von mindestens 1 MPa beaufschlagt wird, insbesondere von mindestens 3 MPa, so dass die Klebemasse vollflächig in Kontakt zu dem Verklebungssubstrat tritt. Die Richtungsangabe "senkrecht zu einem Seitenflächenabschnitt des hitzeaktiviert verklebbaren Flächenelements" bedeutet hierbei, dass für eine flache Verklebung, in der das Flächenelement plan vorliegt (und somit auch dessen beiden Seitenflächen), eine Presskraft (zumindest auch) senkrecht zur Hauptausdehnung des Flächenelements wirkt, wohingegen für eine dreidimensional gewölbte Verklebung eine Presskraft in Richtung senkrecht zu einer der Hauptausdehnungen des Flächenelements und somit zumindest in einem Teilbereich senkrecht zu den Seitenflächen des Flächenelements wirkt.

Überraschenderweise ist es mit diesem Verfahren gelungen, auch sehr kleine Verklebungsflächen, wie sie etwa in mobilen elektronischen Geräten üblich sind, mittels Induktionserwärmung im Mittelfrequenzbereich innerhalb kurzer Zeit zuverlässig zu erwärmen und dadurch zu verkleben, ohne die Elektronik oder andere metallische Bauteile oder Polymere dabei zu beschädigen. Vielmehr wurde beobachtet, dass dann, wenn gleichzeitig mit dem induktiven Erhitzen die zu erstellende Klebeverbindung in statu nascendi mit einem hohen Druck beaufschlagt wurde, das Risiko einer im Verlauf des induktiven Erwärmens eintretenden Beschädigung drastisch reduziert wurde. Auf diese Weise wird ein besonders einfaches Verfahren zur Verfügung gestellt, das für eine Vielzahl an Verklebungssubstraten geeignet ist, mit dem sich sogar Baueinheiten mit elektronischen Bauelementen wie Halbleiterbauelementen oder Anzeigemodulen hochfest verbinden lassen.

Hierbei ist es zudem möglich, die induktive Erwärmung auf die Fläche der Klebefuge zu begrenzen, was durch Verwendung eines hitzeaktiviert verklebbaren Flächenelements in Form eines entsprechenden Zuschnitts noch weiter verbessert werden kann, wenn das Magnet-Wechselfeld in unmittelbarer Nähe der Klebefuge konzentriert wurde, etwa durch Integration des Induktors in das Presswerkzeug.

In einer vorteilhaften Ausgestaltungsform wird das Verfahren derart durchgeführt, dass als das hitzeaktiviert verklebbare Flächenelement ein Flächenelement bereit gestellt wird, das eine weitere hitzeaktiviert verklebende Klebemassenschicht aufweist, und dass der Vorverbund vor dem induktiven Erwärmen mit einem weiteren Verklebungssubstrat in Kontakt gebracht wird, indem die weitere hitzeaktiviert verklebende Klebemassenschicht des hitzeaktiviert verklebbaren Flächenelements des Vorverbunds mit dem weiteren Verklebungssubstrat in Kontakt gebracht wird. Auf diese Weise können mehrere gleiche oder auch unterschiedliche Verklebungssubstrate miteinander in einem einzigen induktiven Erwärmungsschritt miteinander verbunden und die Erwärmungsdauer gleichzeitig insgesamt verringert werden.

Vorteilhafterweise beträgt die Aufheizgeschwindigkeit beim induktiven Erwärmen mindestens 2,5 °C/s und höchstens 200 °C/s, insbesondere mindestens 10 °C/s und höchstens 100 °C/s. Infolge der so gewählten Mindestaufheizgeschwindigkeit lässt sich die zum Verkleben der hitzeaktiviert verklebenden Klebemassen erforderliche Zeit weiter verringen und dadurch die Taktrate beim Verkleben weiter steigern. Durch die Begrenzung der Aufheizgeschwindigkeit auf niedrige Aufheizgeschwindigkeiten wird überdies die Gefahr einer thermischen Schädigung der Klebemassen oder der Verklebungssubstrate verringert und ein unkontrolliertes Aufschmelzen der Klebemasse sowie ein unerwünschtes Aufschmelzen des Verklebungssubstrats vermieden. Besonders geeignet ist das Verfahren dabei, wenn als das hitzeaktiviert verklebbare Flächenelement ein Flächenelement bereit gestellt wird, bei dem als die zumindest eine elektrisch leitende Schicht eine Schicht mit einer Schichtdicke von weniger als 75 µm verwendet wird, insbesondere von weniger als 30 µm oder sogar von weniger als 15 µm. Hierdurch wird die Aufheizgeschwindigkeit des Flächenelements technisch auf besonders einfache Weise nach oben hin begrenzt.

Des weiteren ist es von Vorteil, wenn als das hitzeaktiviert verklebbare Flächenelement ein Flächenelement bereit gestellt wird, dessen Form für eine offene Verklebungsflächengeometrie angepasst ist. Flächenelemente mit einer derartigen Geometrie lassen sich in den bisher bekannten Verfahren zum induktiven Erwärmen nicht oder allenfalls mit großem Aufwand formwahrend homogen verkleben, so das die Ausdehnung des erfindungsgemäßen Prinzips auf derartige Systeme einen weiteren erheblichen Nutzen bietet.

Als das hitzeaktiviert verklebbare Flächenelement kann überdies ein Flächenelement mit einer minimalen Stegbreite von weniger als 5 mm bereit gestellt werden, insbesondere von weniger als 3 mm oder sogar von weniger als 2 mm. Lediglich durch Einsatz des erfindungsgemäßen Verfahrens ist es möglich, auch dann, wenn nur wenig Fläche zum Verkleben von Verklebungssubstraten zur Verfügung steht, die für eine Klebeverbindung nutzbare Fläche zu vergrößern und damit die Festigkeit der Verklebung insgesamt zu erhöhen, ohne dass die Bereiche geringer Stegbreite dabei thermisch beschädigt werden. Derartig kleine laterale Strukturen lassen sich in den bisher bekannten Verklebungsverfahren mittels induktiver Erwärmung nicht oder allenfalls nur mit großem Aufwand verwenden.

Günstig ist es ferner, wenn als das Verklebungssubstrat ein Verklebungssubstrat verwendet wird, das eine im dreidimensionalen Raum gewölbte Verklebungsfläche aufweist. Dadurch lassen sich auf besonders einfache Weise auch dreidimensional ausgestaltete Verklebungsflächenprofile realisieren, da so ein homogenes Erwärmen der hitzeaktiviert verklebenden Klebemassenschicht über deren gesamte Flächenausdehnung möglich ist. Derartige gekrümmte Verklebungsflächen werden etwa häufig bei der Verklebung von Displayscheiben oder Gehäusen in mobilen elektronischen Geräten erzeugt.

Als weiterer Schritt kann erfindungsgemäß der Druck auch nach Beendigung des induktiven Erwärmens für eine Nachpressdauer aufrecht erhalten werden, wobei der Endverbund während zumindest eines Teils der Nachpressdauer erneut induktiv erwärmt wird. Dies bietet den Vorteil, dass die Klebeverbindung infolge des Nachdrucks sich weiter verfestigen und in der verfestigten Form einer Nachhärtung unterzogen werden kann, so dass infolge der hierdurch erzielten Kohäsionssteigerung in der Klebemasse die Festigkeit der Verklebung insgesamt erhöht wird.

Darüber hinaus kann das Verhältnis der Fläche des jeweils gleichzeitig induktiv erwärmten Bereichs des hitzeaktiviert verklebbaren Flächenelements zu der Verklebungsfläche in diesem Bereich weniger als 2 : 1 betragen, insbesondere weniger als 1,5 : 1 oder sogar weniger als 1,2 : 1. Durch eine derartige Verfahrensführung wird die Gefahr, dass das Verklebungssubstrat im Verlauf der induktiven Erwärmung thermisch beschädigt wird, weiter reduziert, da im Wesentlichen nur der Bereich lokal erwärmt wird, an dem eine Verklebung auch tatsächlich beabsichtigt ist. Somit wird die erzeugte Wärmemenge verringert, so dass auch bloß eine geringere Wärmemenge abgeführt werden muss.

Zum Realisieren der erfindungsgemäßen Idee kann das induktive Erwärmen und das Beaufschlagen mit Druck mittels einer Vorrichtung mit zumindest einem Pressstempelelement durchgeführt werden, das ein Induktionsheizungsmittel aufweist. Durch Verwendung einer derartigen Vorrichtung, mit der sich beide wesentlichen Aspekte des Verfahrens mittels ein und desselben Werkzeugs durchführen lassen, kann der Verfahrensablauf beschleunigt und die Taktzahl erhöht werden, da ein Abstimmen von Pressvorrichtung und Induktionsvorrichtung (Induktor) aufeinander nicht erforderlich ist, und darüber hinaus das ansonsten separate Positionieren von Pressvorrichtung und Induktor nunmehr in einem einzigen Schritt durchgeführt werden kann. Bevorzugt ist diese Vorrichtung ortsfest installiert, um die bei dem erfindungsgemäß einzusetzenden hohen Pressdruck erforderliche Betriebssicherheit zu gewährleisten.

Wie zuvor dargelegt, bietet das erfindungsgemäße Verfahren besondere Vorteile, wenn es zum Verkleben von Baueinheiten elektronischer Geräte eingesetzt wird, da sich derartige Verklebungen ansonsten nicht in hohen Taktzahlen ausbilden lassen, ohne dass ein erhöhtes Risiko besteht, dass die elektronischen Bauteile hierbei thermisch beschädigt werden.

Eine zur Durchführung des erfindungsgemäßen Verfahrens besonders angepasste Vorrichtung ermöglicht insbesondere ein induktives Erhitzen eines hitzeaktiviert verklebbaren Flächenelements zum Verkleben des Flächenelements auf einem Verklebungssubstrat mit geringer Wärmekapazität, ohne dass dabei eine thermische oder elektrische Beschädigung erfolgt. Die bisher bekannten Vorrichtungen ermöglichen lediglich ein induktives Erwärmen der Verklebung, während dessen Verlauf die Verklebungssubstrate nur schwach mittels einer Haltevorrichtung fixiert werden, ohne dass auf diese ein signifikanter Pressdruck ausgeübt wird. Das Ausüben eines Pressdrucks erfordert einen unmittelbaren Kontakt mit der Oberfläche des zu verklebenden Körpers. Auf der anderen Seite befindet sich der Induktor in den bislang bekannten Vorrichtungen in einem gewissen Abstand zu dem Flächenelement, wodurch die räumliche Auflösung des Energieeintrags beim induktiven Erwärmen nach dem Stand der Technik verringert wird.

Bei einer Vorrichtung der eingangs genannten Art, weist das zumindest eine Pressstempelelement ein Induktionsheizungsmittel auf, und die Vorrichtung ist für eine Presskraft von zumindest 300 N angepasst, insbesondere von mindestens 600 N. Durch die Integration des Induktors direkt in das Pressstempelelement kann der Abstand zwischen dem Induktor und dem Flächenelement minimiert werden, so dass die zuvor beschriebenen Nachteile überwunden werden.

In einer vorteilhaften Ausgestaltungsform weist die das zumindest eine Pressstempelelement zumindest bereichsweise eine im dreidimensionalen Raum gewölbte Pressfläche auf. Auf diese Weise können außer flächig-planen Verklebungen auch Verklebungen mit dreidimensional ausgeformten Verklebungsflächen erhalten werden, so dass überdies komplexe Verklebungsgeometrien zugänglich sind.

Besonders geeignet ist die Vorrichtung, wenn diese ein weiteres Pressstempelelement aufweist, das zumindest einen ferromagnetischen, ferrimagnetischen, paramagnetischen oder diamagnetischen Jochabschnitt - bevorzugt einen ferrimagnetischen Jochabschnitt - oder ein weiteres Induktionsheizungsmittel aufweist. Ein derartiger Jochabschnitt deformiert das Magnetfeld und erhöht damit dessen Eindringtiefe, so dass insbesondere Verklebungen mit komplexen Verklebungsgeometrien homogen erhitzt werden und somit eine über die gesamte Verklebungsfläche gleichmäßige Adhäsion und Kohäsion bieten. Eine lokal wirkende Verstärkung des Magnet-Wechselfelds lässt sich auch durch den Einsatz eines weiteren Induktionsheizungsmittels erreichen.

Zur Verdeutlichung der Erfindung ist diese im Folgenden allgemein beschrieben, wozu einige repräsentative Beispiele einzelner Bestandteile von Teilaspekten der Erfindung erläutert werden, die sich in Abhängigkeit von den jeweils gewünschten Eigenschaften nahezu beliebig miteinander verknüpfen lassen.

Grundsätzlich betrifft die Erfindung also ein Verfahren zum Verkleben eines hitzeaktiviert verklebbaren Flächenelements mit einer bestimmten Art von Verklebungssubstraten. Als Flächenelement im Sinne dieser Anmeldung gelten insbesondere alle üblichen und geeigneten Gebilde mit im Wesentlichen flächenförmiger Ausdehnung. Diese ermöglichen eine flächige Verklebung und können verschieden ausgestaltet sein, insbesondere flexibel, als Klebefolie, Klebeband, Klebeetikett oder als Formstanzling.

Derartige Flächenelemente weisen jeweils zwei Seitenflächen auf, eine Vorderseite und eine Rückseite. Die Begriffe Vorderseite und Rückseite beziehen sich dabei auf die beiden Oberflächen des Flächenelements parallel zu seiner Hauptausdehnung (Flächenausdehnung, Hauptausdehnungsebene) und dienen lediglich der Unterscheidung dieser beiden auf gegenüberliegenden Seiten des Flächenelements angeordneten Flächen, ohne dass durch die Wahl der Begriffe die absolute räumliche Anordnung der beiden Flächen festgelegt ist; demzufolge kann die Vorderseite auch die räumlich hinten gelegene Seitenfläche des Flächenelements darstellen, nämlich wenn dementsprechend die Rückseite dessen räumlich vorne gelegene Seitenfläche bildet.

Dieses hitzeaktiviert verklebbare Flächenelement soll auf einem Verklebungssubstrat verklebt werden. Dafür weist das Flächenelement an zumindest einer seiner beiden Seitenflächen eine hitzeaktiviert verklebende Klebemasse auf, bevorzugt sogar an beiden Seitenflächen. Hitzeaktiviert verklebende Klebemassen sind alle Klebemassen, die bei erhöhten Temperaturen heiß verklebt werden und nach dem Erkalten eine mechanisch belastbare Verbindung bieten. Üblicherweise liegt die Klebemasse in Form einer Klebemassenschicht vor.

Als Schicht wird insbesondere eine flächenförmige Anordnung eines Systems einheitlicher Funktionalität bezeichnet, deren Abmessungen in einer Raumrichtung (Dicke oder Höhe) signifikant kleiner sind als in den beiden anderen Raumrichtungen (Länge und Breite), die die Hauptausdehnung definieren. Eine derartige Schicht kann kompakt oder auch durchbrochen ausgebildet sein und aus einem einzigen Material oder aus unterschiedlichen Materialien bestehen, insbesondere, wenn diese zur einheitlichen Funktionalität dieser Schicht beitragen. Eine Schicht kann eine über ihre gesamte Flächenausdehnung konstante Dicke aufweisen oder aber unterschiedliche Dicken. Darüber hinaus kann eine Schicht natürlich auch mehr als eine einzige Funktionalität aufweisen.

Das vorliegend zu verklebende Flächenelement enthält zumindest zwei unterschiedliche Schichten, nämlich mindestens eine elektrisch leitende Schicht und mindestens eine hitzeaktiviert verklebende Klebemassenschicht. Als elektrisch leitende Schicht wird jede Schicht aus mindestens einem Material angesehen, das bei 23 °C eine Leitfähigkeit (Elektronen und/oder Löcher) von mindestens 1 mS/m aufweist, so dass in diesem ein elektrischer Stromfluss auftreten kann. Dies sind insbesondere Metalle, Halbmetalle sowie andere metallische Materialien und gegebenenfalls auch Halbleiter, in denen der elektrische Widerstand gering ist. Damit ist der elektrische Widerstand der elektrisch leitenden Schicht also einerseits hoch genug, um beim Fließen eines elektrischen Stroms in der Schicht eine Erwärmung der Schicht zu ermöglichen, andererseits aber auch niedrig genug, um einen Stromfluss durch die Schicht überhaupt zu etablieren. Als Sonderfall sind als elektrisch leitende Schichten auch Schichten aus Materialien anzusehen, die einen niedrigen magnetischen Widerstand aufweisen (und somit eine hohe magnetische Leitfähigkeit oder magnetische Permeabilität), beispielsweise Ferrite, obgleich diese häufig einen bei Wechselstrom niedriger Frequenzen höheren elektrischen Widerstand aufweisen, so dass hier eine Erwärmung häufig erst bei tendenziell höheren Magnet-Wechselfeldfrequenzen erreicht wird.

Grundsätzlich kann die zumindest eine elektrisch leitende Schicht beliebig geeignet ausgebildet sein, beispielsweise als dünne vollflächig-kompakte oder durchbrochene Schicht mit einer Schichtdicke von weniger als 75 µm, insbesondere von weniger als 30 µm oder sogar von weniger als 15 µm. Letzteres ermöglicht es, die Aufheizgeschwindigkeit nach oben hin auf relativ einfache Weise zu begrenzen.

Die elektrisch leitende Schicht kann aus allen üblichen und geeigneten Materialien bestehen, etwa aus Aluminium, Kupfer, Gold, Nickel, Mu-Metall, Alnico, Permalloy, Ferrit und dergleichen. Bevorzugt ist die elektrisch leitende Schicht dabei zusätzlich auch magnetisch, insbesondere ferromagnetisch oder paramagnetisch. Wenngleich für derartige Materialien erwartet wird, dass in diesen zusätzlich zu einer Induktion von Wirbelströmen auch eine Erwärmung durch Hystereseverluste auftritt und die Erwärmungsgeschwindigkeit insgesamt größer ausfällt, so wurde hingegen beobachtet, dass selbst magnetische Materialien wie Nickel oder magnetische Stähle, die den elektrischen Strom gut leiten, durchweg geringere Erwärmungsgeschwindigkeiten haben als Materialien, die zwar den elektrischen Strom sehr gut leiten, selbst aber nicht magnetisch sind, beispielsweise Kupfer, Aluminium, Kohlenstoff-Nanoröhren oder Graphene. Daher lässt sich durch Verwendung von magnetischen, den elektrischen Strom leitenden Materialien die Erwärmung leichter kontrollieren und das Auftreten von Erwärmungseffekten abseits der Klebefuge vermindern.

Auf der anderen Seite kann es aber auch vorteilhaft sein, wenn die elektrisch leitende Schicht diamagnetisch ist, also eine magnetische Permeabilität kleiner 1 sowie eine Suszeptibilität kleiner 0 besitzt. Beispiele für solche Materialien sind etwa Kupfer, Silber, Blei und Zinn sowie alle supraleitende Materialien. In Versuchen mit derartigen Systemen zeigte sich, dass sich aufgrund des geringeren Skineffekts mit diesen Materialien höhere Erwärmungsgeschwindigkeiten erzielen lassen als mit paramagnetischen oder ferromagnetischen Materialien von einer ähnlichen elektrischen Leitfähigkeit. Entsprechend kann auch ein Verfahren günstig sein, bei dem sich durch Verwendung einer diamagnetischen Schicht bereits für dünne Schichten mit einer Dicke von weniger als 15 µm eine hohe Aufheizgeschwindigkeit von mehr als 100 °C/s erreichen lässt. Zusätzlich zu der zumindest einen elektrisch leitenden Schicht kann das Flächenelement natürlich auch weitere elektrisch leitende Schichten aufweisen; diese können mit der zumindest einen elektrisch leitenden Schicht identisch oder von dieser verschieden sein.

Insgesamt kann das hitzeaktiviert verklebbare Flächenelement beliebig geeignet ausgebildet sein. So kann das Flächenelement zusätzlich zu den beiden zuvor beschriebenen Schichten weitere Schichten enthalten, zum Beispiel permanente Träger oder temporäre Träger. Ferner kann das Flächenelement auf lediglich einer seiner beiden Seitenflächen verklebbar oder auf beiden Seitenflächen verklebbar ausgebildet sein, etwa als einseitig verklebbares bzw. doppelseitig verklebbares Klebeband. In letzterem Fall weist das Flächenelement zumindest eine weitere Klebemassenschicht auf, wobei diese mit der zumindest einen hitzeaktiviert verklebenden Klebemasse identisch oder von dieser verschieden sein kann. Somit kann die weitere Klebemassenschicht zum Beispiel eine hitzeaktiviert verklebende Klebemasse oder sogar eine Haftklebemasse enthalten.

Als die zumindest eine hitzeaktiviert verklebende Klebemasse können grundsätzlich alle üblichen hitzeaktiviert verklebenden Klebemassensysteme zum Einsatz gelangen. Hitzeaktiviert verklebende Klebemassen lassen sich grundsätzlich in zwei Kategorien einordnen: thermoplastische hitzeaktiviert verklebende Klebemassen (Schmelzklebstoffe) und reaktive hitzeaktiviert verklebende Klebemassen (Reaktivklebstoffe). Diese Einteilung enthält auch solche Klebemassen, die sich beiden Kategorien zuordnen lassen, nämlich reaktive thermoplastische hitzeaktiviert verklebende Klebemassen (reaktive Schmelzklebstoffe).

Thermoplastische Klebemassen basieren auf Polymeren, die bei einem Erwärmen reversibel erweichen und während des Erkaltens wieder erstarren. Im Gegensatz dazu enthalten reaktive hitzeaktiviert verklebende Klebemassen reaktive Komponenten. Letztere Bestandteile werden auch als "Reaktivharze" bezeichnet, in denen durch das Erwärmen ein Vernetzungsprozess eingeleitet wird, der nach Beendigen der Vernetzungsreaktion eine dauerhafte stabile Verbindung auch unter Druck gewährleistet. Bevorzugt enthalten derartige thermoplastische Klebemassen auch elastische Komponenten, zum Beispiel synthetische Nitrilkautschuke. Derartige elastische Komponenten verleihen der hitzeaktiviert verklebenden Klebemasse infolge ihrer hohen Fließviskosität eine auch unter Druck besonders hohe Dimensionsstabilität.

Im Folgenden sind rein exemplarisch einige typische Systeme hitzeaktiviert verklebender Klebemassen beschrieben, die sich im Zusammenhang mit der vorliegenden Erfindung als besonders vorteilhaft herausgestellt haben.

Eine thermoplastische hitzeaktiviert verklebende Klebemasse enthält also ein thermoplastisches Basispolymer. Dieses weist bereits bei geringem Anpressdruck ein gutes Fließverhalten auf, so dass sich die für die Haltbarkeit einer dauerhaften Verklebung relevante finale Klebkraft innerhalb kurzer Anpresszeit einstellt und daher ein schnelles Verkleben auch auf rauem oder anderweitig kritischem Untergrund möglich ist. Als thermoplastische hitzeaktiviert verklebende Klebemassen können alle aus dem Stand der Technik bekannten thermoplastischen Klebemassen verwendet werden.

Exemplarische Zusammensetzungen sind etwa in EP 1 475 424 A1 beschrieben. So kann die thermoplastische Klebemasse beispielsweise eine oder mehrere der folgenden Komponenten enthalten oder sogar aus diesen bestehen: Polyolefine, Ethylen-Vinylacetat-Copolymere, Ethylen-Ethylacrylat-Copolymere, Polyamide, Polyester, Polyurethane oder Butadien-Styrol-Blockcopolymere. Bevorzugt kommen etwa die in Absatz [0027] von EP 1 475 424 A1 aufgeführten thermoplastischen Klebemassen zum Einsatz. Weitere thermoplastische Klebemassen, die insbesondere für spezielle Einsatzgebiete wie zum Beispiel das Verkleben von Verklebungssubstraten aus Glas besonders geeignet sind, sind in EP 1 95 60 63 A2 beschrieben. Bevorzugt werden thermoplastische Klebemassen verwendet, deren Schmelzviskosität durch rheologische Additive heraufgesetzt ist, beispielsweise durch Zusatz von pyrogenen Kieselsäuren, Ruß, Kohlenstoff-Nanoröhren und/oder weiteren Polymeren als Abmischkomponenten.

Eine reaktive hitzeaktiviert verklebende Klebemasse weist hingegen vorteilhafterweise ein elastomeres Basispolymer und ein Modifikationsharz auf, wobei das Modifikationsharz ein Klebharz und/oder ein Reaktivharz umfasst. Infolge der Verwendung eines elastomeren Basispolymers ist es möglich, Klebeschichten mit hervorragender Dimensionsstabilität zu erhalten. Als reaktive hitzeaktiviert verklebende Klebemassen können entsprechend den jeweiligen konkreten Anwendungen alle aus dem Stand der Technik bekannten hitzeaktiviert verklebenden Klebemassen eingesetzt werden.

Dies beinhaltet zum Beispiel auch reaktive hitzeaktiviert verklebende Folien auf Basis von Nitrilkautschuken oder deren Derivaten wie etwa Nitrilbutadienkautschuke oder Mischungen (Blends) dieser Basispolymere, die zusätzlich Reaktivharze wie etwa Phenolharze enthalten; ein derartiges Produkt ist etwa unter der Bezeichnung tesa 8401 kommerziell erhältlich. Der Nitrilkautschuk verleiht der hitzeaktiviert verklebenden Folie infolge seiner hohen Fliessviskosität eine ausgeprägte Dimensionsstabilität, wodurch sich nach Durchführen einer Vernetzungsreaktion hohe Klebkräfte auf Kunststoffoberflächen realisieren lassen.

Natürlich lassen sich auch andere reaktive hitzeaktiviert verklebende Klebemassen einsetzen wie etwa Klebemassen, die zu einem Masseanteil von 50 bis 95 Gew.-% ein verklebbares Polymer und zu einem Masseanteil von 5 bis 50 Gew.-% ein Epoxidharz oder eine Mischung aus mehreren Epoxidharzen enthalten. Das verklebbare Polymer enthält hierbei vorteilhafterweise zu 40 bis 94 Gew.-% Acrylsäureverbindungen und/oder Methacrylsäureverbindungen der allgemeinen Formel CH₂=C(R¹)(COOR²) (R¹ stellt hierbei einen Rest dar, der ausgewählt ist aus der Gruppe umfassend H und CH₃, und R² stellt einen Rest dar, der ausgewählt ist aus der Gruppe umfassend H und lineare oder verzweigte Alkylketten mit 1 bis 30 Kohlenstoffatomen), zu 5 bis 30 Gew.-% ein erstes copolymerisierbares Vinylmonomer, das zumindest eine Säuregruppe aufweist, insbesondere eine Carbonsäuregruppe und/oder Sulfonsäuregruppe und/oder Phosphonsäuregruppe, zu 1 bis 10 Gew.-% ein zweites copolymerisierbares Vinylmonomer, das zumindest eine Epoxidgruppe oder eine Säureanhydridfunktion aufweist, und zu 0 bis 20 Gew.-% ein drittes copolymerisierbares Vinylmonomer, das zumindest eine funktionelle Gruppe aufweist, die sich von der funktionellen Gruppe des ersten copolymerisierbaren Vinylmonomers und von der funktionellen Gruppe des zweiten copolymerisierbaren Vinylmonomers unterscheidet. Eine derartige Klebemasse ermöglicht ein Verkleben mit einer schnellen Aktivierung, bei der innerhalb kurzer Zeit bereits die finale Klebkraft erreicht wird, so dass hierdurch insgesamt eine gut haftende Verbindung auf unpolarem Untergrund gewährleistet ist.

Eine weitere einsetzbare reaktive hitzeaktiviert verklebende Klebemasse, die besondere Vorteile bietet, enthält zu 40 bis 98 Gew.-% ein acrylathaltiges Blockcopolymer, zu 2 bis 50 Gew.-% eine Harzkomponente und zu 0 bis 10 Gew.-% eine Härterkomponente. Die Harzkomponente enthält eines oder mehrere Harze, die gewählt werden aus der Gruppe umfassend die Klebkraft steigernde (klebrigmachende) Epoxidharze, Novolakharze und Phenolharze. Die Härterkomponente wird zum Vernetzen der Harze aus der Harzkomponente eingesetzt. Eine derartige Formulierung bietet infolge der starken physikalischen Vernetzung innerhalb des Polymers den besonderen Vorteil, dass sich Klebeschichten mit einer großen Gesamtdicke erhalten lassen, ohne dass dabei die Belastbarkeit der Verklebung insgesamt beeinträchtigt wird. Dadurch sind diese Klebeschichten besonders geeignet, Unebenheiten im Untergrund auszugleichen. Überdies weist eine solche Klebemasse eine gute Alterungsbeständigkeit und ein nur geringes Ausgasungsverhalten auf, was bei vielen Verklebungen im Elektronikbereich besonders erwünscht ist.

Wie bereits vorstehend erwähnt, lassen sich außer diesen besonders vorteilhaften Klebemassen jedoch grundsätzlich auch alle anderen hitzeaktiviert verklebenden Klebemassen entsprechend dem jeweiligen Anforderungsprofil für die Verklebung auswählen und einsetzen.

Die Erfindung betrifft nunmehr ein Verfahren zum Verkleben solcher Flächenelemente an zumindest einem Verklebungssubstrat, das eine geringe Wärmeleitfähigkeit besitzt, das also einen Wärmeleitungskoeffizienten von höchstens 5 W/mK aufweist; dies bedeutet, dass also zumindest die Oberfläche des Fügeteils eine derartig geringe Wärmeleitfähigkeit aufweisen muss. Dazu kann die Oberfläche des Verklebungssubstrats großflächig oder teilflächig einen keramischen Werkstoff, polymeren Werkstoff oder Gläser aufweisen. Im Bereich der Konsumgüterelektronik werden zum Beispiel häufig Polyvinylchlorid, Acrylnitril-Butadien-Styrol, Polycarbonat, Polypropylen, Polyethylenterephthalat, Polyethylennaphthalat, Polymethylmethacrylat sowie auch Polybutylenterephthalat oder Mischungen basierend auf diesen Kunststoffen verwendet. Zudem kommen häufig auch nichtleitende dünne Oberflächenschichten zum Einsatz, etwa solche auf der Basis von Siliziumoxid oder Aluminiumoxid. Werden unterschiedliche Verklebungssubstrate miteinander verklebt, können die Oberflächen der Verklebungssubstrate hinsichtlich ihrer Materialien identisch, ähnlich oder verschieden ausgebildet sein.

Natürlich kann das Verklebungssubstrat insgesamt beliebig geeignet gestaltet sein und zum Beispiel eine zumindest bereichsweise gleichmäßig ebene Oberfläche aufweisen, an der die Klebemassenschicht des Flächenelements verklebt werden soll. Die Oberfläche des Flächenelements kann aber auch regelmäßig oder unregelmäßig gebogen gestaltet sein, so dass das Verklebungssubstrat eine Verklebungsfläche aufweist, die dreidimensional im dreidimensionalen Raum gewölbt ist.

Zur Durchführung dieses Verfahrens wird zunächst das zuvor beschriebene hitzeaktiviert verklebbare Flächenelement bereit gestellt. Die Form des Flächenelements ist dabei an die Form der Verklebungsfläche angepasst, so dass das Flächenelement etwa als Zuschnitt oder Stanzling vorliegt. Dies bedeutet, dass deren Form in etwa oder exakt der Form der Verbindungsflächen der zu verbindenden Bauteile und somit an der lateralen Form der Klebefuge entspricht. Typischerweise sind bei solchen Flächenelementen die Anforderungen an Formstabilität und Verklebungsfestigkeit besonders hoch. Dadurch, dass das Flächenelement in der Geometrie der Verklebungsfläche zur Verfügung gestellt wird, ist sichergestellt, dass das Aufheizen nur in den für die Verklebung benötigten Flächenbereichen stattfindet. Somit kann die die Gefahr thermischer Schädigungen noch effektiver verringert werden. Die Formgebung des Flächenelements kann dabei mittels allen dem Fachmann geläufigen formgebenden Trennverfahren erfolgen, also etwa als Trennen nach dem Prinzip des Durchstoßens (Stanzens), des Messerschnitts, des Scherenschnittes, des Laserschnitts oder des Wasserstrahlschnitts.

Die Form des Flächenelements kann dabei insbesondere für eine offene Verklebungsflächengeometrie angepasst sein, so dass die Klebefuge zwischen dem Flächenelement und dem zumindest einen Verklebungssubstrat als eine nicht geschlossene Fläche ausgebildet ist. Dies beinhaltet Flächen, die ihrerseits von Aussparungen durchbrochen vorliegen, wie auch Flächen, die im Wesentlichen aus linienförmigen Elementen zusammengesetzt sind und daher etwa eine Kammstruktur oder Fingerstruktur besitzen. Insbesondere solche Kammstrukturen oder Fingerstrukturen sind hierbei geeignet, bei denen die einzelnen Elemente - insbesondere deren zentralen Rippenelemente sowie abzweigenden Rippenelemente - ein Verhältnis von Länge zu Breite (Aspektverhältnis) von mehr als 2 aufweisen.

Zusätzlich oder stattdessen kann die minimale Stegbreite der Verklebungsbereiche des Flächenelements (und damit auch die minimale Stegbreite des Flächenelements selber) weniger als 3 mm betragen oder sogar weniger als 2 mm. Flächenelemente mit derartig dünnen minimalen Stegbreiten lassen sich mit den bisher bekannten Verklebungsverfahren mittels induktiven Erwärmens nicht ohne weiteres verkleben. Besonders vorteilhaft ist der Einsatz des erfindungsgemäßen Verfahrens, wenn die erwärmte Fläche, an der das hitzeaktiviert verklebbare Flächenelement mit dem zumindest einen Verklebungssubstrat oder mit allen Verklebungssubstraten in Kontakt steht, sehr klein ist, also kleiner als 5 cm² ist. Auch bei derartig filigranen Verklebungssubstraten kann durch das Verfahren ein unkontrolliertes Aufschmelzen der Klebemasse vermieden werden.

Zum Verbinden wird das Verklebungssubstrat mit einem Seitenflächenabschnitt des hitzeaktiviert verklebbaren Flächenelements in Kontakt gebracht, so dass ein Teil oder die gesamte Fläche einer der beiden Seitenflächen einen Bereich der Oberfläche des Verklebungssubstrats berührt, wodurch ein Vorverbund gebildet wird, also ein temporär bestehender Verbund vor dem eigentlichen abschließenden Verbinden.

Dieser Vorverbund wird für eine Dauer von höchstens 20 s einem Magnet-Wechselfeld einer Mittelfrequenz ausgesetzt, also einer Frequenz von mindestens 100 Hz und höchstens 200 kHz, und dadurch in diesem Magnet-Wechselfeld induktiv erwärmt. Magnet-Wechselfelder dieser Frequenzen bieten eine hinreichend geeignete Eindringtiefe, wobei aus diesem Grund bevorzugt Magnet-Wechselfelder mit Frequenzen von 1 kHz bis 40 kHz eingesetzt werden, insbesondere von weniger als 15 kHz, wodurch die wirksame Eindringtiefe des Magnetfelds insgesamt erhöht werden kann, ohne dass dafür ein erhöhter apparativer Aufwand erforderlich ist. Infolge der induktiven Erwärmung wird die zumindest eine hitzeaktiviert verklebende Klebemasse aktiviert, die sich im Kontakt mit dem zumindest einen Verklebungssubstrat befindet, wodurch ein Endverbund gebildet wird (also ein mittels Verklebung erhaltener Verbund aus einem Flächenelement und mindestens einem Verklebungssubstrat, das direkt mit einer Seitenfläche des Flächenelements verbunden ist). Die Maximaldauer von 20 s ist hierbei erforderlich, um hinreichend hohe Erwärmungsgeschwindigkeiten und somit auch eine hohe Verfahrensgeschwindigkeit zu gewährleisten.

Zur Realisierung des erfinderischen Konzepts ist es zwingend erforderlich, dass der Vorverbund während des induktiven Erwärmens mit einem Druck von mindestens 1 MPa beaufschlagt wird, bevorzugt sogar von mindestens 3 MPa. Dieser Druck spiegelt eine Kraft oder Kraftkomponente wieder, die senkrecht zu einem Seitenflächenabschnitt des hitzeaktiviert verklebbaren Flächenelements auf das Flächenelement einwirkt. Eine derartig senkrecht einwirkende Kraft ist jede Kraft, die auf das Flächenelement senkrecht zu einer Fläche einwirkt, die innerhalb der äußeren Begrenzungen des Flächenelements aufgespannt wird. Somit kann bei einem Flächenelement, dessen Verklebungsfläche dreidimensional im dreidimensionalen Raum ausgebildet ist, die Richtung, aus der die Kraft auf das Flächenelement einwirkt, lokal innerhalb einzelner Bereiche der tatsächlichen Verklebungsfläche auch von der senkrechten Richtung abweichen, obgleich die Krafteinwirkung insgesamt senkrecht erfolgt, bezogen auf eine von der äußeren Umrandung des Flächenelements aufgespannten hypothetischen Wirkfläche des Flächenelements. Lediglich der Vollständigkeit halber sei darauf hingewiesen, dass die einwirkende Kraft zudem auch Komponenten aufweisen kann, die nicht senkrecht zur Wirkfläche einwirken, solange zusätzlich auch senkrecht einwirkende Komponenten vorhanden sind.

Bei dieser Verfahrensführung stellt sich zudem ein weiterer vorteilhafter Effekt ein: Niedermolekulare Verbindungen, zum Beispiel Wasser oder Gase wie etwa Luft, die bei Raumtemperatur in der Polymermatrix der hitzeaktiviert verklebenden Klebemassenschicht adsorbiert vorliegen, desorbieren üblicherweise, wenn die Klebemasse auf die Aktivierungstemperatur erhitzt wird. Die desorbierten niedermolekularen Verbindungen verteilen sich dabei in der Klebemassenschicht in Form von Blasen, so dass die Klebemasse unerwünschterweise aufgeschäumt wird. Die Freisetzung niedermolekularer Verbindungen unter diesen Bedingungen ist überdies noch problematischer, wenn die zumindest eine hitzeaktiviert verklebende Klebemassenschicht eine Reaktivklebemasse enthält, in der eine thermisch induzierte Vernetzungsreaktion in Form einer Polykondensationsreaktion abläuft. Hierbei werden aus dem Polymernetzwerk der Klebemasse als Nebenprodukte der Vernetzungsreaktion niedermolekulare Verbindungen abgespalten, die bei den jeweils gewählten Aktivierungstemperaturen gasförmig vorliegen, beispielsweise als Wasserdampf.

Die hierbei freigesetzten Mengen an gasförmigem oder flüssigem Fluid können beträchtlich sein: So können hitzeaktiviert verklebende Klebemassen auf der Basis von Copolyamiden etwa Wasser zu einem Masseanteil von einigen Prozent enthalten, das an das Makromolekülnetzwerk adsorbiert ist und beim Erhitzen teilweise entweicht. Dabei kommt es zu einem Aufschäumen oder einer Blasenbildung innerhalb der Klebemasse, was wiederum eine Verringerung von Adhäsion und Kohäsion dieser Klebemasse insgesamt zur Folge hat; dies gilt es daher zu vermeiden.

Bei hitzeaktiviert verklebenden Klebemassen wurde beobachtet, dass bei einem Pressdruck von mehr als 0,2 MPa eine Blasenbildung durch desorbierende oder in einer chemischen Reaktion entstehende gasförmige Fluide wie etwa Wasserdampf vermieden wird, wobei sich für hohe Vernetzungstemperaturen ein Druck von mehr als 0,5 MPa als erforderlich herausgestellt hat. Insoweit der erfindungsgemäß einzusetzende Druck deutlich größer ist als diese Werte, wird nebenbei also eine Blasenbildung innerhalb der Klebemassenschicht verhindert. Es sei jedoch darauf hingewiesen, dass für niederviskose Klebemassen (zum Beispiel Flüssigklebstoffe) sowie für einige bei niedrigen Temperaturen schmelzende thermoplastische Klebemassen bei einem Druck oberhalb von 0,2 MPa die Klebemasse aus der Klebefuge heraus fließt und somit für einzelne Anwendungen des erfindungsgemäßen Verfahrens unter Umständen weniger geeignet sein kann.

Grundsätzlich kann die Aufheizgeschwindigkeit beim induktiven Erwärmen beliebig gewählt werden, wobei sich allerdings Aufheizgeschwindigkeiten von mindestens 2,5 °C/s und höchstens 200 °C/s als vorteilhaft herausgestellt haben, insbesondere von mindestens 10 °C/s und höchstens 100 °C/s. Durch die Begrenzung der Aufheizgeschwindigkeiten nach oben wird die mit der Aufheizgeschwindigkeit ansteigende Gefahr einer thermischen Schädigung der Klebemassen und/oder des Verklebungssubstrats sowie das Risiko eines unkontrollierten Aufschmelzens der Klebemassen verringert. Eine derartige Begrenzung der Aufheizgeschwindigkeit nach oben kann zum Beispiel auf einfache Weise durch Verwenden einer elektrisch leitenden Schicht erreicht werden, die aus einem den elektrischen Strom schlecht leitenden Metall besteht, also durch den Einsatz von Aluminium anstelle von Kupfer oder sogar von Nickel anstelle von Aluminium.

Ein weiterer einfacher Weg, die Aufheizgeschwindigkeit nach oben hin zu begrenzen, besteht darin, als elektrisch leitende Schicht flächenförmig ausgebreitete metallische Gebilde einzusetzen, die in ihrer Flächenausdehnung diskontinuierlich unterbrochen oder durchbrochen sind, also zum Beispiel Streckmetall, Drahtgewebe, Drahtgeflecht, Bändchengewebe, Bändchengeflecht sowie gelochte oder geschlitzte Metallfolien.

Zum Verkleben kann erfindungsgemäß die gesamte Verklebungsfläche des Flächenelements gleichzeitig induktiv erwärmt werden, was insbesondere bei einer kleinen Verklebungsfläche mit kompakter Geometrie sinnvoll sein kann, etwa bei einer kleinflächig-kreisförmigen Verklebungsfläche. Stattdessen ist es aber auch möglich, nur einen Teil der gesamten Verklebungsfläche des Flächenelements gleichzeitig induktiv zu erwärmen, was insbesondere bei einer großen Verklebungsfläche mit offener Geometrie sinnvoll sein kann.

Wird nur ein Teil der gesamten Verklebungsfläche des Flächenelements gleichzeitig erwärmt, so lässt sich dies etwa erreichen, indem die Lage des Vorverbunds relativ zu der Lage des Induktors und der Pressvorrichtung geändert wird; bei einem kleinen Vorverbund wird vorzugsweise der Vorverbund an einer ortsfest installierten Anordnung von Induktor und Pressvorrichtung kontinuierlich oder diskontinuierlich vorbei geführt, bei einem großen Vorverbund kann aber auch die Anordnung von Induktor und Pressvorrichtung an dem festen Vorverbund kontinuierlich oder diskontinuierlich vorbei geführt werden.

Infolge dieser Relativbewegung wird ein zeitliches und räumliches Erwärmungsprofil erhalten, dessen Parameter entsprechend der jeweiligen Geometrie des herzustellenden Endverbunds sowie dessen späterem Einsatzzweck gewählt werden können.

Wird die induktive Erwärmung nun so durchgeführt, dass jeweils das gesamte Flächenelement gleichzeitig erwärmt wird, dann hat es sich als besonders günstig herausgestellt, wenn zu jedem Zeitpunkt während des induktiven Erwärmens die erwärmte Verklebungsfläche einen großen Teil des erwärmten Bereichs des Flächenelements ausmacht. Dies ist der Fall, wenn zusätzlich zu den zur Verklebung beitragenden Bereichen jeweils nur wenige Bereiche des Flächenelements erwärmt werden, die nicht zur Verklebung beitragen. Von Vorteil ist es dabei, wenn das Verhältnis zwischen der Fläche des Bereichs des hitzeaktiviert verklebbaren Flächenelements, der zu einem Zeitpunkt jeweils induktiv erwärmt wird (also die jeweils gleichzeitig erwärmten Bereiche des Flächenelements, die in der Verklebung zur Verklebung beitragen und die in der Verklebung nicht zur Verklebung beitragen), und der Verklebungsfläche in diesem Bereich (also die jeweils gleichzeitig erwärmten zur Verklebung beitragenden Bereiche des Flächenelements) weniger als 2 : 1 beträgt, insbesondere weniger als 1,5 : 1 oder sogar weniger als 1,2 : 1. Dadurch nehmen in dem jeweils gleichzeitig erwärmten Bereich des Flächenelements die nicht zur Verklebung beitragenden Bereiche höchstens dieselbe Fläche ein wie die zur Verklebung beitragenden Bereiche, bevorzugt weniger als die Hälfte oder sogar nur ein Fünftel der Fläche der zur Verklebung beitragenden Bereiche.

Weist das hitzeaktiviert verklebbare Flächenelement nur eine einzige hitzeaktiviert verklebende Klebemassenschicht auf, so kann das Flächenelement an der Oberfläche des Verklebungssubstrats derart angeordnet sein, dass es dieses mit einem weiteren Verklebungssubstrat brückenartig verbindet. Weist das hitzeaktiviert verklebbare Flächenelement hingegen zusätzlich zu der zumindest einen hitzeaktiviert verklebenden Klebemassenschicht eine weitere hitzeaktiviert verklebende Klebemassenschicht auf, so kann der Vorverbund vor dem induktiven Erwärmen mit einem weiteren Verklebungssubstrat in Kontakt gebracht werden, indem die weitere hitzeaktiviert verklebende Klebemassenschicht des hitzeaktiviert verklebbaren Flächenelements des Vorverbunds mit dem weiteren Verklebungssubstrat in Kontakt gebracht wird.

Im Vorverbund kann die Verbindung zwischen der weiteren hitzeaktiviert verklebenden Klebemassenschicht und dem weiteren Verklebungssubstrat locker und noch nicht dauerhaft sein, die dann beim abschließenden induktiven Erhitzen zusammen mit der zumindest einen hitzeaktiviert verklebenden Klebemassenschicht thermisch aktiviert wird. Alternativ kann diese Verbindung aber auch bereits dauerhaft fest sein, was sich etwa realisieren lässt, wenn die zumindest eine hitzeaktiviert verklebende Klebemassenschicht von der weiteren hitzeaktiviert verklebenden Klebemassenschicht verschieden ist und dabei die Aktivierungstemperatur der zumindest einen hitzeaktiviert verklebenden Klebemassenschicht höher ist als die Aktivierungstemperatur der weiteren hitzeaktiviert verklebenden Klebemassenschicht. Zum Herstellen des Vorverbunds kann dann zunächst die weitere hitzeaktiviert verklebende Klebemassenschicht mit dem weiteren Verklebungssubstrat in Kontakt gebracht und der so entstehende lose Vor-Vorverbund aus Flächenelement und dem weiteren Verklebungssubstrat mittels einer Heizungseinrichtung erhitzt werden, die nicht induktiv arbeitet, etwa mit einem herkömmlichen Ofen, einem Wärmestrahler oder einer Kontaktheizung. Dabei wird der Vor-Vorverbund auf eine Temperatur erhitzt, bei der die weitere hitzeaktiviert verklebende Klebemassenschicht bereits thermisch aktiviert wird, nicht aber die zumindest eine hitzeaktiviert verklebende Klebemassenschicht.

Ferner können weitere Verfahrensschritte den Schritten des erfindungsgemäßen Verfahrens vorausgehen, diesen nachfolgen oder zwischen zwei Schritten des erfindungsgemäßen Verfahrens durchgeführt werden. Beispielsweise kann der Druck auch nach Beendigung des induktiven Erwärmens für eine Nachpressdauer aufrecht erhalten werden, etwa während des Ablaufs einer thermisch aktivierten Vernetzungsreaktion oder zum Fixieren der Fügeteile während des Abkühlens der Klebemasse, um also eine Verfestigung der Klebefuge durch physikalische oder chemische Effekte zu ermöglichen. Während dieser Nachpressdauer kann der bereits gebildete Endverbund nicht erhitzt werden (so dass zum Nachpressen dann eine weitere Pressvorrichtung eingesetzt werden kann, die selber keinen Induktor aufweist, wodurch infolge der Verwendung einer weiteren Pressvorrichtung die Zykluszeit reduziert werden kann), mittels einer externen Kühleinheit gekühlt werden oder während zumindest eines Teils der Nachpressdauer erneut erwärmt werden, beispielsweise im Rahmen einer weiteren induktiven Erwärmung. Hierbei lässt sich die Temperatur in der Klebefuge aufrecht erhalten, wobei die Nacherwärmung mit einer geringeren Aufheizgeschwindigkeit oder bei einer niedrigeren Temperatur durchgeführt werden kann als die Ersterwärmung.

Die über das Magnetfeld eingebrachte Leistung lässt sich auf unterschiedliche Weise beeinflussen, wobei grundsätzlich alle geeigneten Methoden eingesetzt werden können. So kann zum Beispiel die Stärke des durch die Erzeugerwicklung fließenden Stroms entsprechend angepasst werden. In der Praxis hat es sich ferner als vorteilhaft herausgestellt, das Magnet-Wechselfeld regelmäßig unterbrochen (intermittierend) zu betreiben und so die effektive Wirkzeit des magnetischen Wechselfeldes zu beeinflussen. Hierbei wird das Magnet-Wechselfeld "gepulst", also zyklisch eingeschaltet und abgeschaltet. Typischerweise beträgt die Pulsdauer des Magnet-Wechselfelds beim induktiven Erwärmen weniger als 1 s, insbesondere weniger als 0,1 s, und die Pausendauer zwischen zwei Pulsen beträgt weniger als 1 s, insbesondere weniger als 0,1 s. Durch einen pulsartig intermittierenden Betrieb kann eine äußerst homogene Erwärmung erreicht und ein lokales Überhitzen vermindert oder sogar vollständig vermieden werden.

Das erfindungsgemäße Verfahren wird bevorzugt zum Verkleben von Baueinheiten elektronischer Geräte eingesetzt, etwa solche aus dem Bereich der Konsumgüterelektronik, Unterhaltungselektronik oder Kommunikationselektronik (zum Beispiel für Mobiltelefone, PDAs, Laptops und andere Rechner, Digitalkameras, Anzeigegeräte wie etwa Displays, Digitalreader oder organische Leuchtdiodendisplays (OLEDs) sowie für Solarzellenmodule wie etwa elektrochemische Farbstoff-Solarzellen, organische Solarzellen oder Dünnschichtzellen). Als Baueinheiten werden vorliegend alle Bestandteile und Ansammlungen derselben verstanden, die in elektronischen Geräten verwendet werden, beispielsweise elektronische Bauteile (diskrete und integrierte Bauelemente), Gehäuseteile, elektronische Module, Antennen, Anzeigefelder, Schutzscheiben, unbestückte und/oder bestückte Platinen und dergleichen.

Das Verfahren lässt sich unter Verwendung eines zum induktiven Erwärmen üblichen Induktors und einer Pressvorrichtung durchführen. Als Pressvorrichtung können alle zum Ausüben eines Pressdrucks geeigneten Vorrichtungen eingesetzt werden, zum Beispiel diskontinuierlich arbeitende Pressmaschinen wie etwa eine Pneumatik- oder Hydraulikpresse, eine Exzenterpresse, eine Kurbelpresse, eine Kniehebelpresse, eine Spindelpresse oder dergleichen, oder auch kontinuierlich arbeitende Pressmaschinen wie etwa eine Presswalze. Die Vorrichtung kann als separate Einheit vorgesehen sein oder aber mit dem Induktor verbunden vorliegen. Bevorzugt kommt etwa eine Vorrichtung zum Einsatz, die als erstes Presswerkzeug zumindest ein Pressstempelelement enthält, das zudem ein Induktionsheizungsmittel aufweist. Dadurch kann das Induktionsfeld sehr nah an die zu bildende Verklebungsstelle herangeführt werden und somit auch räumlich auf die Fläche dieser Verklebungsstelle begrenzt werden.

Als Induktionsheizungsmittel (Induktor) kommen alle üblichen und geeigneten Anordnungen in Frage, also etwa von einem elektrischen Wechselstrom durchflossene Spulen, Leiterschleifen oder Leiter, die infolge des hindurch fließenden Stroms ein Magnet-Wechselfeld geeigneter Stärke erzeugen. So kann die zum Erwärmen erforderliche Magnetfeldstärke durch eine Spulenanordnung von entsprechender Wicklungszahl und Spulenlänge bereit gestellt werden, die von einem entsprechenden Strom durchflossen ist, beispielsweise als Punktinduktor. Diese kann ohne ferromagnetischen Kern ausgebildet sein oder aber einen Kern aufweisen, beispielsweise aus Eisen oder gepresstem Ferritpulver. Der Vorverbund kann dem so erzeugten Magnetfeld direkt ausgesetzt sein. Alternativ ist es natürlich auch möglich, obige Spulanordnung als Primärwicklung auf der Primärseite eines Magnetfeldübertragers (Transformator) anzuordnen, auf dessen Sekundärseite eine Sekundärwicklung einen entsprechend höheren Strom bereitstellt. Dadurch kann die in der unmittelbaren Nähe des Vorverbunds angeordnete eigentliche Erregerspule infolge des höheren Stroms eine geringere Zahl an Windungen aufweisen, ohne dass dadurch die Feldstärke des Magnet-Wechselfeldes verringert wird.

Im Folgenden werden allgemeine Ausführungen einer solchen kombinierten Vorrichtung mit zumindest einem Pressstempelelement und zumindest einem darin integrierten Induktionsheizungsmittel beschrieben. Als Pressstempelelemente im Sinne der vorliegenden Erfindung werden alle Baugruppen verstanden, die in der Lage sind, einen definierten Druck auf eine Fläche auszuüben. Pressstempelelemente können den Druck kontinuierlich (etwa als Walze) oder diskontinuierlich (etwa als Pressenstößel) ausüben, wobei der ausgeübte Druck zeitlich konstant sein oder einem festgelegten zeitlichen Verlauf folgen kann. Die Vorrichtung muss dabei für eine Presskraft von zumindest 300 N angepasst sein, insbesondere von mindestens 600 N.

Zum Ausüben eines entsprechenden Drucks benötigt das zumindest eine Pressstempelelement ein Gegenlager als zweites Presswerkzeug; dieses Gegenlager kann entweder passiv ausgebildet sein (etwa als Festlager) oder aber aktiv am Aufbau des Druckes mitwirken, etwa als ein weiteres Pressstempelelement. Die Oberfläche des zumindest einen Pressstempelelements kann dabei der zu erzielenden Form der Verklebung entsprechend ausgestaltet sein und somit beispielsweise eine plane Pressfläche oder aber eine zumindest bereichsweise im dreidimensionalen Raum gewölbte Pressfläche aufweisen, also zumindest in einem Teilbereich oder in mehreren Teilbereichen der Pressfläche vorliegen. Die gewölbte Pressfläche sollte dabei zu der Form des jeweiligen Bereichs des Vorverbunds komplementär ausgebildet sein.

Vorteilhafterweise weist das Gegenlager (also etwa das Festlager oder das weitere Pressstempelelement) einen - bevorzugt ferrimagnetischen - Jochabschnitt und zusätzlich dazu oder stattdessen ein weiteres Induktionsheizungsmittel auf. Beides hat denselben Effekt, nämlich die Eindringtiefe des Magnetfeldes zu erhöhen und somit ein gleichmäßiges Erwärmen zu bieten, so dass die Verklebung über die gesamte Verklebungsfläche auch bei einer Aufwölbung im dreidimensionalen Raum homogen ausgebildet wird.

Ein solcher Jochabschnitt kann beispielsweise aus einem ferritartigen Material gebildet werden, das in das weitere Pressstempelelement integriert wurde und das das Magnetfeld lokal anzieht, auf den konkreten Verklebungsbereich konzentriert und somit dessen Eindringtiefe erhöht. Das Joch kann dabei so angeordnet werden, dass es das Magnetfeld nur in dem Bereich anzieht, in dem eine besonders große Eindringtiefe benötigt wird, etwa, indem die Form des Jochabschnitts an die Form der zu erzielenden Verklebungsfläche angepasst ist. Durch Einsatz eines derartigen - bevorzugt ferrimagnetischen - Jochabschnitts wird einerseits die laterale Ausdehnung des Erwärmungsfeldes begrenzt, andererseits aber auch eine hinreichende Eindringtiefe des Magnetfelds in die zu verbindenden Verklebungssubstrate bereit gestellt, so dass technisch sinnvolle Erwärmungsgeschwindigkeiten erreicht werden. Dadurch lassen sich insbesondere auch Verklebungen mit Geometrien, die im Wesentlichen eckig und kleinflächig ausgebildet sind, mit hoher Homogenität und daraus resultierender hoher Festigkeit herstellen. Solche eckigen Verklebungsstrukturen mit Eckenradien von weniger als 5 mm können mit herkömmlichen Verfahren zum induktiven Erwärmen nicht gleichmäßig überhitzungsfrei und somit zerstörungsarm erzeugt werden, so dass die bisher bekannten Verklebungen üblicherweise im Wesentlichen runde oder zumindest stark abgerundete Geometrien aufweisen.

Eine Verstärkung des lokal wirkenden Magnet-Wechselfelds in der Klebefuge lässt sich überdies auch mittels eines weiteren Induktionsheizungsmittels in dem weiteren Pressstempelelement erzielen. Hierzu ist es sinnvoll, die Phasenlage dieses Magnet-Wechselfeldes des weiteren Induktionsheizungsmittels mit der Phasenlage des Magnet-Wechselfeldes des zumindest einen Induktionsheizungsmittels abzustimmen oder sogar zu synchronisieren, so dass sich die Magnetfelder nicht gegenseitig aufheben und dadurch schwächen, sondern vielmehr verstärken.

Weitere Vorteile und Anwendungsmöglichkeiten gehen aus den Untersuchungsergebnissen hervor, die anhand der beigefügten Zeichnungen im Folgenden näher beschrieben werden sollen. Dabei zeigt
Fig. 1 schematisch einen Längsschnitt durch einen Versuchsaufbau zur Durchführung des erfindungsgemäßen Verfahrens, der zur Untersuchung des erfindungsgemäßen Prinzips eingesetzt wurde;
Fig. 2 Konturdiagramme der erzielten Verklebungsfestigkeit in Abhängigkeit von der Pulsdauer eines intermittierend wirkenden Magnet-Wechselfelds und der Einwirkungsdauer des Magnet-Wechselfelds, wobei die Einzeldiagramme für hitzeaktiviert verklebbare Flächenelemente erstellt wurden, die sich im Hinblick auf das Material und die Schichtdicke der elektrisch leitenden Schicht unterschieden;
Fig. 3 Konturdiagramme der erzielten Verklebungsfestigkeit in Abhängigkeit von der Pulsdauer eines intermittierend wirkenden Magnet-Wechselfelds und der Einwirkungsdauer des Magnet-Wechselfelds, wobei die Einzeldiagramme für hitzeaktiviert verklebbare Flächenelemente mit besonders dünnen elektrisch leitenden Schichten erstellt wurden, die sich im Hinblick auf die Schichtdicke der elektrisch leitenden Schicht unterschieden;
Fig. 4 ein Konturdiagramm der erzielten Verklebungsfestigkeit in Abhängigkeit von der Dicke der elektrisch leitenden Schicht und der Einwirkungsdauer des Magnet-Wechselfelds für ein hitzeaktiviert verklebbares Flächenelement;
Fig. 5 schematisch einen Längsschnitt durch einen zweiten Versuchsaufbau zur Durchführung des erfindungsgemäßen Verfahrens, der in weiteren Untersuchungen zum erfindungsgemäßen Prinzip eingesetzt wurde; und
Fig. 6 schematisch einen Längsschnitt durch einen dritten Versuchsaufbau zur Durchführung des erfindungsgemäßen Verfahrens, der in weiteren Experimenten im Hinblick auf die bestimmungsgemäße Eignung des erfindungsgemäßen Prinzips eingesetzt wurde.

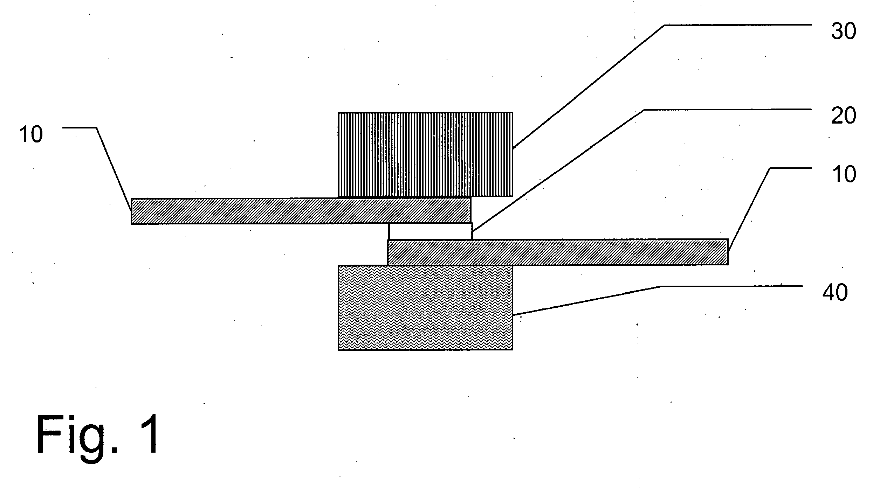

Die Probenuntersuchungen erfolgten in der in Fig. 1 schematisch dargestellten Anordnung. Hierfür wurden jeweils zwei Polycarbonatplatten 10 ("Polycarbonatstäbe") mit einer Breite von 20 mm, einer Länge von 100 mm und einer Dicke von 3 mm als Verklebungssubstrate unter Verwendung unterschiedlicher hitzeaktiviert verklebbarer Flächenelemente 20 nach dem erfindungsgemäßen Verfahren miteinander verklebt, indem die Verklebungssubstrate in der Klebefuge um 10 mm überlappten und so eine rechteckige Verklebungsfläche mit einer Kantenlänge von 10 mm x 20 mm bildeten. Für Vergleichsuntersuchungen wurde eine der beiden Polycarbonatplatten 10 durch eine Aluminiumplatte gleicher Fläche mit einer Dicke von 1,5 mm ersetzt.

Als hitzeaktiviert verklebende Klebemassenschicht wurde, soweit nicht anders beschrieben, ein hitzeaktiviert verklebbares Klebeband mit einer Klebemasse auf der Basis von Nitrilkautschuk und Phenolharz eingesetzt, das unter der Bezeichnung tesa HAF 84xx in unterschiedlichen Dicken verfügbar ist (die unterschiedlichen Dicken ergeben sich aus dem Produktnamen anhand der konkreten Angaben für den als Platzhalter angegebenen Teil "xx"). Zum Einsatz kamen hierbei Klebemassenschichten mit einer Schichtdicke von 30 µm (tesa HAF 8405) und Klebemassenschichten mit einer Schichtdicke von 60 µm (tesa HAF 8410).

Als Modellstruktur für die elektrisch leitende Schicht wurde eine Metallfolie definierter Zusammensetzung und Schichtdicke verwendet. Auf diese wurde jeweils auf jede Seite eine Klebemassenschicht bei einer Temperatur von 100 °C laminiert, so dass sich ein beidseitig hitzeaktiviert verklebbares Flächenelement mit Klebemassenschichten identischer Zusammensetzung an den beiden Seitenflächen der Metallfolie ergab. Bei dieser Laminierungstemperatur wird die chemische Vernetzungsreaktion innerhalb der Klebemasse noch nicht gestartet, sondern lediglich ein Anhaften der Klebemassenschichten an der Metallfolie ermöglicht. Untersucht wurden für Schichtdicken im Bereich von 10 µm bis 50 µm Folien aus Aluminium, Kupfer, Nickel, Eisen und Stahl (St1.4310).

Das Verklebungsverfahren wurde mit Hilfe einer modifizierten Induktionsanlage des Typs EW5F der Firma IFF GmbH, Ismaning, durchgeführt. Als Induktor zum lokalen Bereitstellen des Magnet-Wechselfeldes dient hier ein Induktionsfeldübertrager, der aus lediglich einem wassergekühlten stromdurchflossenen Leiter besteht, der als Sekundärspulenkreis eines Transformatorfeldübertragers eingesetzt wird und in einem Koaxialtransformator mit dem primärspulenseitig erzeugten Übertragerfeld in Wechselwirkung tritt. Der Induktionsfeldübertrager wurde in eine Matrix aus Polyetheretherketon (PEEK) eingebettet und die so erhaltene Anordnung als unteres Pressstempelelement 40 einer Pressvorrichtung eingesetzt. Der Anpressdruck zwischen dem unteren Pressstempelelement 40 und einem oberen Pressstempelelement 30, mit dem der Vorverbund senkrecht zu den Seitenflächen des hitzeaktiviert verklebbaren Flächenelements beaufschlagt wurde, betrug jeweils 2 MPa.

Mit Hilfe der modifizierten Induktionsanlage wurden für die Untersuchungen Magnet-Wechselfelder einer Frequenz aus einem Bereich von 10 kHz bis 30 kHz bei einer Pulsweite aus einem Bereich von 30 % bis 70 % erzeugt. Die Pulsweite gibt den prozentualen Anteil der Pulsdauer (Pulslänge) des Magnet-Wechselfelds an der Gesamtperiodendauer (der Summe aus Pulsdauer und der Dauer der Pausen zwischen zwei aufeinanderfolgenden Pulsen) des Magnet-Wechselfelds an. Die Zeit, in der das hitzeaktiviert verklebbare Flächenelement dem gepulsten Magnet-Wechselfeld ausgesetzt war (also die Dauer der induktiven Erwärmung), lag hier in einem Bereich von 3 s bis 9 s. Alle Versuche wurden zudem mit einer Nachpresszeit von 10 s durchgeführt, innerhalb derer eine induktive Nacherwärmung in einem Magnet-Wechselfeld derselben Frequenz wie beim thermischen Aktivieren der Klebemassen bei einer Pulsweite von 20 % erfolgte (entsprechend einem Verhältnis von Pulsdauer zu Pausendauer von 1 : 4).

Um die grundsätzliche Eignung des erfindungsgemäßen Verfahrens zu untersuchen, wurde zunächst als hitzeaktiviert verklebende Klebemassenschicht ein verklebbares Klebeband auf der Basis von Synthesekautschuk und Epoxidharz eingesetzt (tesa HAF 8863; Dicke: 50 µm). Während bei den Nitrilkautschuk-Phenolharz-Klebebändern, die in den übrigen Experimenten als praxisnahe Modell-Klebemassenschicht eingesetzt wurden, beim Verkleben in einer Polykondensationsreaktion ein Nebenprodukt erzeugt wird, das bei einem geringem Anpressdruck ein Aufschäumen der Klebemassenschicht zur Folge hat, ist dies bei Klebemassenschichten auf der Basis von Synthesekautschuk und Epoxidharz nicht der Fall. Daher sind diese Systeme besonders geeignet, um Informationen über etwaige thermische Abbauprozesse in Abhängigkeit von der jeweiligen Verfahrensführung zu untersuchen, ohne dass dabei ein starkes Aufschäumen der Klebemassenschicht die Untersuchung beeinträchtigt.

Hierfür wurde bei einer Temperatur von 100 °C auf jede Seitenfläche einer Aluminiumfolie von 36 µm Dicke jeweils eine dieser Klebemassenschichten laminiert. Bei einer derartig niedrigen Laminierungstemperatur wird die chemische Vernetzungsreaktion noch nicht gestartet, sondern lediglich ein Anhaften der Klebemassenschichten an der Metallfolie ermöglicht, so dass eine Art Vorverbund für ein beidseitig hitzeaktiviert verklebbares Flächenelement erhalten wird.

Das induktive Erwärmen wurde anschließend mit Hilfe der modifizierten Induktionsanlage durchgeführt, wozu ein Magnet-Wechselfeld mit einer Frequenz von 20 kHz und einer Pulsweite von 70 % für eine Dauer von 9 s angelegt wurde. Um den Einfluss des Anpressdrucks auf einen etwaigen thermischen Abbau zu untersuchen, wurden in dieser Versuchsreihe identische Proben mit unterschiedlichen Anpressdrücken beaufschlagt und die erhaltene Verklebung visuell begutachtet. Die eingesetzten Anpressdrücke betrugen 0,2 MPa, 0,5 MPa , 0,8 MPa, 1 MPa, 2 MPa und 3,5 MPa.

Bei Beaufschlagen mit einem Anpressdruck von weniger als 1 MPa trat im Verlauf des induktiven Erwärmens regelmäßig eine Verfärbung der Klebemassenschichten in Form von dunklen Bereichen auf. Eine derartige Schwarzfärbung wurde insbesondere an den Rändern des jeweils untersuchten Prüfabschnitts beobachtet und wurde auf einen thermischen Abbau der Klebemassenschicht zurückgeführt. Eine solche Schwärzung war hingegen nicht erkennbar, wenn der Anpressdruck 1 MPa oder mehr betrug. Demzufolge ist ersichtlich, dass durch Einsatz des erfindungsgemäßen Verfahrens auch das Auftreten von thermischen Beschädigungen der Klebemassenschichten während des induktiven Erwärmens verhindert oder zumindest signifikant verringert wird.

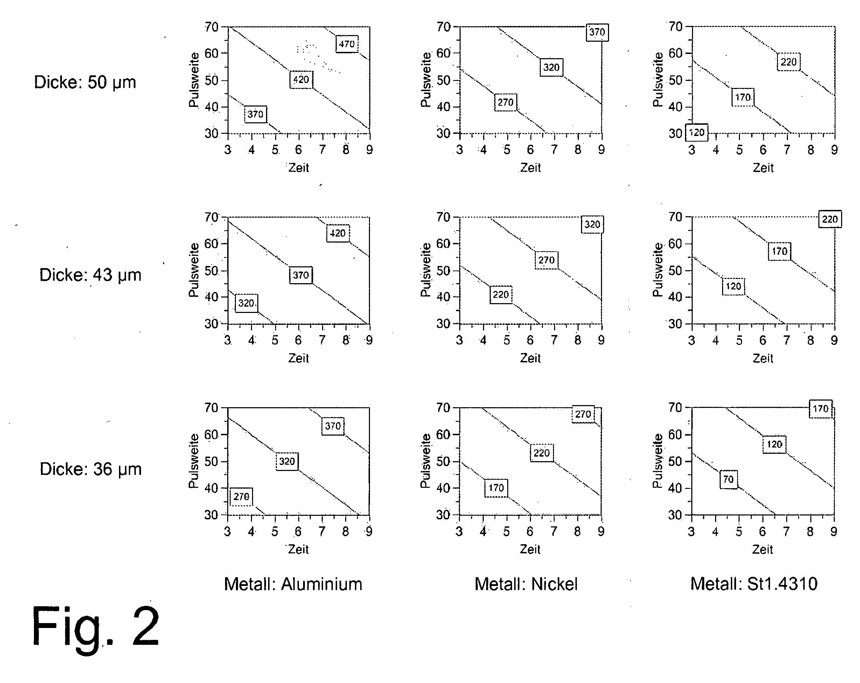

In weiteren Untersuchungen wurde als Kenngröße für die Qualität der erzielten Verklebung die Verklebungsfestigkeit des so erhaltenen Verbunds für unterschiedliche hitzeaktiviert verklebbare Flächenelemente und unterschiedliche Verfahrensparameter ermittelt. Hierzu wurde die Verklebungsfestigkeit in einem dynamischen Zugscherversuch entsprechend DIN 53283 bei 23 °C für eine Prüfgeschwindigkeit von 1 mm/min jeweils quantitativ bestimmt (in N/cm²). Eine repräsentative Auswahl der Ergebnisse der umfassenden Versuchsreihen dieser Untersuchungen ist in den Einzeldiagrammen der Fig. 2, 3 und 4 wiedergegeben.

Jedes Einzeldiagramm zeigt ein Konturdiagramm, in dem die jeweils bestimmte Verklebungsfestigkeit (in N/cm²) in Abhängigkeit von der Dauer (in s) der induktiven Erwärmung (Abszisse) sowie einer weiteren Größe (der prozentualen Pulsweite (in %) oder der Schichtdicke (in µm) der elektrisch leitenden Schicht; Ordinate) als Konturlinien dargestellt ist; der jeweilige dynamische Klebkraftwert ist dabei an der zugehörigen Konturlinie (Isodyne) angegeben. Erkennbar ist in allen Konturdiagrammen, dass die Verklebungsfestigkeit generell mit der Dauer der induktiven Erwärmung und mit steigender Pulsweite bzw. steigender Schichtdicke zunimmt.

In Fig. 2 sind Messreihen für unterschiedliche Metallfolien als elektrisch leitende Schicht gezeigt; die Spalten geben von links nach rechts eine Schicht aus Aluminium, eine Schicht aus Nickel und eine Schicht aus dem Stahl St1.4310 wieder, und die Zeilen geben von oben nach unten unterschiedliche Schichtdicken dieser elektrisch leitenden Schichten von 50 µm, 43 µm und 36 µm wieder. Als hitzeaktiviert verklebende Klebemassenschicht wurde auf jede der zwei Seitenflächen einer Metallfolie jeweils ein beidseitig klebend ausgerüstetes Klebeband (tesa HAF 8410) mit einer Dicke von 60 µm auflaminiert. Dargestellt sind die jeweils erzielten Verklebungsfestigkeiten in Abhängigkeit von der Pulsdauer eines intermittierend wirkenden Magnet-Wechselfelds während des Verklebens (die Nachbehandlung erfolgte stets bei einer Pulsweite von 20 %) und der Einwirkungsdauer des Magnet-Wechselfelds.

Bei diesen Untersuchungen zeigte sich, dass bei Verwendung von elektrisch leitenden Schichten aus magnetischen Metallen (bei Nickel und St1.4310) eine signifikant geringere Verklebungsfestigkeit erreicht wurde als bei Verwendung von nicht-magnetischen Aluminiumfolien derselben Schichtdicke. Demzufolge wurde bei den magnetischen Metallen eine geringere Erwärmungsleistung vom Magnet-Wechselfeld aufgenommen als bei dem nicht-magnetischen Metall. Dieser Befund ist überraschend, da eigentlich erwartet wurde, dass bei Verwendung von magnetischen Metallen die Wirbelstromerwärmung sowie die Erwärmung durch Ummagnetisierungsverluste kombiniert auftreten und somit eine höhere Erwärmungsgeschwindigkeit aufweisen sollten. Dies konnte experimentell jedoch nicht bestätigt werden.

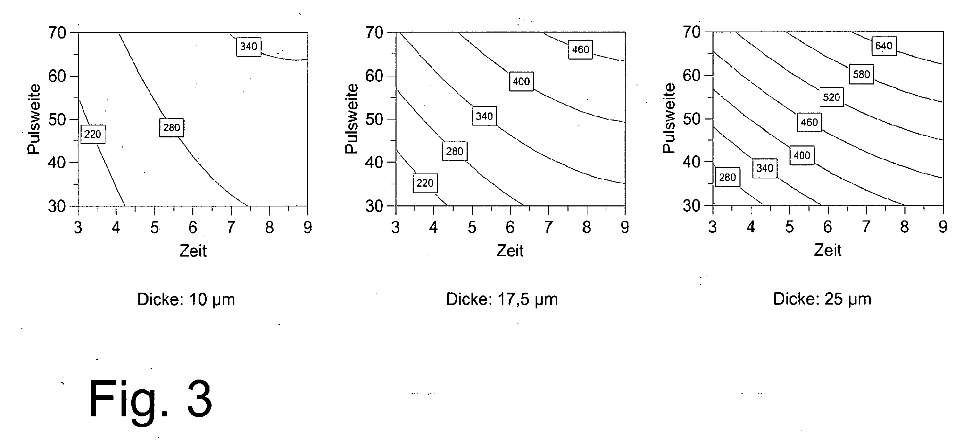

In Fig. 3 ist eine Messreihe für dünne Kupferfolien als elektrisch leitende Schicht gezeigt, wobei die Diagramme von links nach rechts für Schichtdicken der Kupferfolie von 10 µm, 17,5 µm und 25 µm erhalten wurden. Als hitzeaktiviert verklebende Klebemassenschicht wurde auf jede der zwei Seitenflächen einer Kupferfolie jeweils ein beidseitig klebend ausgerüstetes Klebeband (tesa HAF 8405) mit einer Dicke von 30 µm auflaminiert, so dass die Dicke der hitzeaktiviert verklebenden Klebemassenschichten im Laminat in dieser Messreihe konstant blieb. Es wurde beobachtet, dass mit zunehmender Schichtdicke der elektrisch leitenden Schicht höhere Festigkeiten erzielt wurden, was als Zunahme der von der elektrisch leitenden Schicht aufgenommenen Erwärmungsleistung des Magnet-Wechselfeldes interpretiert wird.

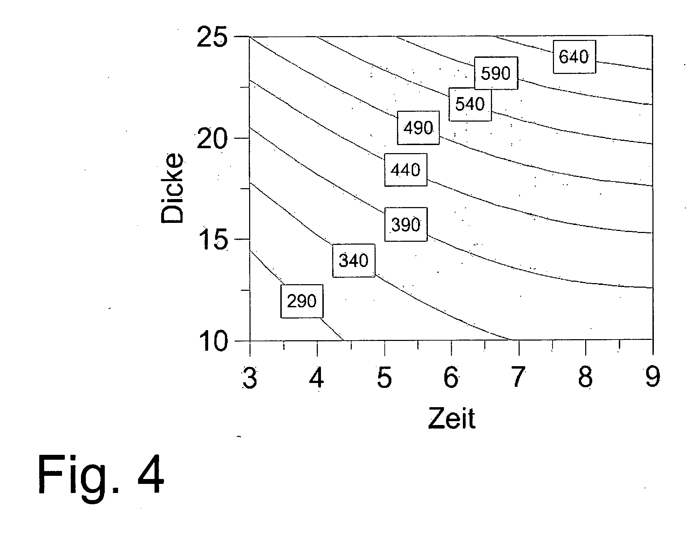

In Fig. 4 ist ein Konturdiagramm für ein Flächenelement mit einer Kupferfolie als elektrisch leitender Schicht gezeigt, wobei die Pulsdauer (Pulsweite) des intermittierend wirkenden Magnet-Wechselfelds hierfür alle Messdaten 70 % betrug. Somit entsprechen die in Fig. 4 dargestellten Daten einer Zusammenschau der in den Einzeldiagrammen der Fig. 3 dargestellten Daten am oberen Rand der Einzeldiagramme. Aus der hieraus ersichtlichen Abhängigkeit der Verklebungsfestigkeit von der Dicke der elektrisch leitenden Schicht ist erkennbar, dass sich mit dünnen hitzeaktiviert verklebbaren Flächenelementen bereits bei kurzen Erwärmungszeiten schon sehr hohe Verklebungsfestigkeiten realisieren ließen, die hochreproduzierbar durch die Verfahrensparameter eingestellt werden konnten.

Für Vergleichsmessungen wurde als hitzeaktiviert verklebbares Flächenelement eine hitzeaktiviert verklebende Klebemassenschicht mit einer Dicke von 60 µm (tesa HAF 8410) ohne eine elektrisch leitende Schicht eingesetzt. Mit Hilfe dieses Flächenelements wurde eine der oben beschriebenen Polycarbonatplatten mit einer Aluminiumplatte gleicher Fläche verklebt, die eine Dicke von 1,5 mm besaß. Der Austausch der einen Polycarbonatplatte gegen eine Aluminiumplatte war erforderlich, um eine hinreichend hohe Wärmeleitfähigkeit des Verklebungssubstrats zu gewährleisten, so dass für den Vergleichsversuch die Wärme, die zum Aktivieren der Klebemasse erforderlich ist, von außen durch eine Heizpresse in den Vorverbund eingeleitet werden konnte (Kontakterwärmungsverfahren). Zum Aktivieren wurde der Vorverbund bei einem Druck von 2 MPa für 5 s oder für 10 s geheizt. Die Verklebungsfestigkeit des so erhaltenen Verbunds wurde für eine Heizdauer von 5 s zu 610 N/cm² und für eine Heizdauer von 10 s zu 640 N/cm² bestimmt.

Im Vergleich mit den in Fig. 2, 3 und 4 dargestellten Ergebnissen belegen die Vergleichsversuche, dass sich durch Einsatz des erfindungsgemäßen Verfahrens Klebverbindungen mit der gleichen Verklebungsfestigkeit herstellen lassen wie in einem konventionellen Kontakterwärmungsverfahren. Dieses Ergebnis ist überraschend, da im verwendeten Flächenelement durch die im Innern des Flächenelements angeordnete Metallfolie mehr Grenzflächen vorhanden sind als im Vergleichsbeispiel, wobei grade an diesen Grenzflächen üblicherweise eine besonders große Schwächung des Verbunds beobachtet wird, etwa infolge eines Ansammelns von thermischen Zersetzungsprodukten aus Klebemasse der an der Metallfolie und einem damit verbundenen Ablösen der Klebemassenschicht von der Metallfolie an dieser ohnehin als Verbundschwächungsfläche ausgebildeten Grenzfläche.

Somit zeigen die Beispiele also, dass sich mit dem erfindungsgemäßen Verfahren Klebeverbindungen herstellten lassen, die den in herkömmlichen Verfahren erhältlichen Klebeverbindungen zumindest gleichwertig sind, dass eine Entfernung zwischen Induktor und Klebefuge von 3 mm problemlos überbrückt werden kann und dass sich dabei zudem Verklebungszeiten von weniger als 10 s realisieren lassen.

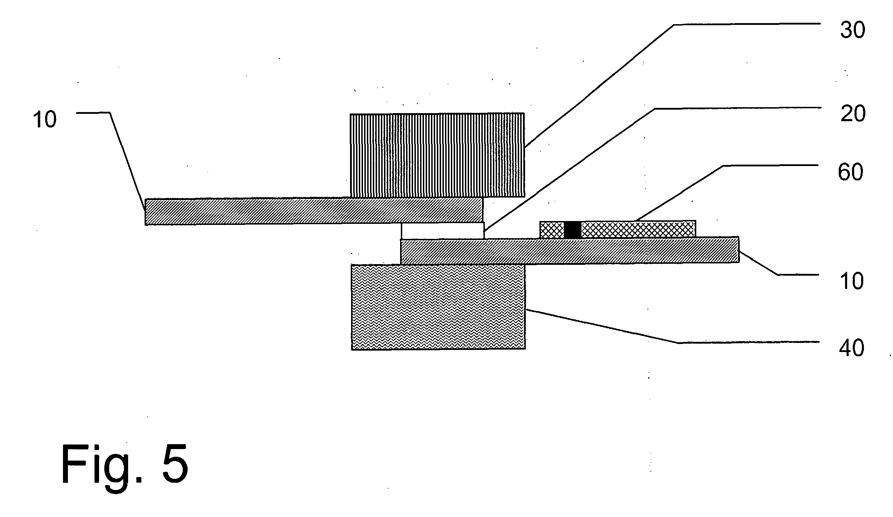

Eine Aufgabe des erfindungsgemäßen Verfahrens war es, thermische Beschädigungen insbesondere von elektronischen Bauteilen beim Verkleben zu vermeiden. Um zu überprüfen, ob das erfindungsgemäße Verfahren hierfür grundsätzlich geeignet ist, wurde in einem weiteren Versuch eine Verklebung in unmittelbarer Nähe zu einer elektronischen Baugruppe durchgeführt. Hierfür wurden in dem in Fig. 5 wiedergegebenen allgemeine Aufbau zwei Polycarbonatplatten 10 ("Polycarbonatstäbe") über ein hitzeaktiviert verklebbares Flächenelement 20 nach dem erfindungsgemäßen Verfahren unter Verwendung eines unteren Pressstempelelements 30 und eines oberen Pressstempelelements 40, das einen integrierten Induktor aufwies, miteinander verklebt, wobei an einer der beiden Polycarbonatplatten 10 ein hinsichtlich der Antennenanordnung modifiziertes RFID-Etikett 60 (Firma Rako) mit einer gedruckten Antenne und einem mit dieser verbundenen RFID-Chip derart befestigt war, dass der Abstand zwischen dem Rand der Verklebungsfläche und dem RFID-Chip 5 mm betrug. Hierbei wurde darauf geachtet, dass sich die metallischen Bestandteile des RFID-Etiketts 60 nicht unmittelbar oberhalb desjenigen Bereichs des unteren Pressstempelelements befanden, in dem das Induktionsheizungsmittel angeordnet war. Die Verklebungsfläche wurde bei einer Pulsweite vom 70 % über eine Zeit von 10 s induktiv erwärmt und der so erhaltene Verbund ebenfalls der oben genannten Nachbehandlung unterzogen.

Nach dem Verkleben wurde das RFID-Etikett (insbesondere der RFID-Chip) hinsichtlich seiner Funktionsfähigkeit untersucht. Es wurde dabei keine Beeinträchtigung der Funktionsfähigkeit des RFID-Etiketts beobachtet. Wurde hingegen die Verklebung mittels Kontakterwärmungsverfahren erhalten, war der RFID-Chip nicht mehr auslesbar.

Bei weiteren Vergleichsversuchen, in denen das RFID-Etikett unter Druck induktiv erwärmt und damit verklebt wurde, waren jedoch der Induktor und die Pressvorrichtung als separate Einheiten ausgebildet. In diesen weiteren Versuchen konnten zwar die meisten RFID-Chips nach dem Verkleben noch ausgelesen werden, der Anteil der nicht mehr auslesbaren RFID-Chips war jedoch erheblich größer dies als bei Verwendung einer integrierten Vorrichtung der Fall war, wo nahezu kein RFID-Chip beeinträchtigt war). Das signifikant geringere Risiko, die RFID-Chips beim Verkleben zu beschädigen, wurde auf die stärkere räumliche Konzentration des Magnetfeldes bei Verwenden einer integrierten Vorrichtung zurückgeführt.

Die vorstehenden Versuche belegen, dass das erfindungsgemäße Verfahren tatsächlich zur Realisierung der gewünschten schonenden Verklebung geeignet ist.

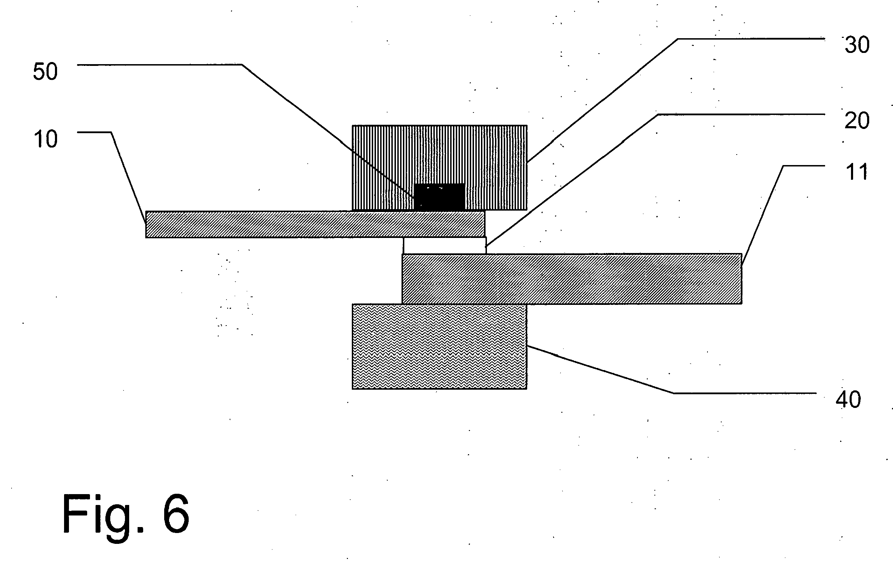

Schließlich wurde in einer weiteren Versuchsreihe die Effizienz eines ferrimagnetischen Jochabschnitts untersucht, der in einem der zwei Pressstempelelemente der Press-HeizVorrichtung angeordnet ist; die Versuchsanordnung ist in Fig. 6 schematisch wiedergegeben.

Es wurde ein hitzeaktiviert verklebbares Flächenelement 20 mit einer elektrisch leitenden Schicht aus Aluminium mit einer Schichtdicke von 50 µm und zwei einer hitzeaktiviert verklebenden Klebemassenschichten einer Schichtdicke von jeweils 60 µm (tesa HAF 8410) an beiden Seiten der Aluminiumschicht zwischen einer oberen Polycarbonatplatte 10 und einer unteren Polycarbonatplatte 11 verklebt. Im Unterschied zu den zuvor beschriebenen Versuchen wurde hier die Dicke der unteren Polycarbonatplatte 11, die sich beim Verkleben im direkten Kontakt mit dem unteren Pressstempelelement 40 befindet, das auch das Induktionsheizungsmittel (den Induktor) enthält, variiert; es wurden Platten mit einer Dicke von 3 mm, 6 mm und 9 mm verwendet. Zusätzlich wurde in das obere Pressstempelelement 30 ein Joch 50 aus Ferrit als Jochabschnitt eingefügt, das eine Länge von 30 mm Länge, eine Breite von 5 mm Breite und eine Höhe von ebenfalls 5 mm besaß. Das Joch war direkt über der Klebefuge angeordnet, wobei die Längsachse der Klebefuge entsprechend der Längsachse des Jochs ausgerichtet wurde.

Auch hier erfolgte das induktive Erwärmen unter den oben beschriebenen Bedingungen bei einem Pressdruck von 2 MPa mit einer Erwärmungsdauer von 10 s und einer Nachbehandlung. Der so erhaltene Verbund wurde hinsichtlich seiner Verklebungsfestigkeit (jeweils in N/cm²) in einem dynamischen Zugscherversuch entsprechend DIN 53283 bei 23 °C für eine Prüfgeschwindigkeit von 1 mm/min untersucht. Als Vergleichsversuche wurden Verklebungen unter denselben Bedingungen erzeugt, wobei das in diesen Versuchen eingesetzte obere Pressstempelelement 30 jedoch kein Joch aufwies.

Für ein unteres Verklebungssubstrat mit einer Dicke von 3 mm, 6 mm und 9 mm wurden bei Verwendung eines Jochs 50 Verklebungsfestigkeiten von 490 N/cm², 480 N/cm² bzw. 260 N/cm² bestimmt. Entsprechend wurden, wenn das obere Pressstempelelement 30 kein Joch aufwies, Verklebungsfestigkeiten von 510 N/cm², 240 N/cm² bzw. 50 N/cm² bestimmt. Somit ist erkennbar, dass der Einfluss der Dicke des unteren Verklebungssubstrats auf die erzielte Verklebungsfestigkeit erheblich größer war, wenn kein Joch verwendet wurde, wohingegen ein geringfügigerer Effekt beobachtet wurde, wenn ein Joch zum Einsatz kam. Dies zeigt den vorteilhaften Einfluss eines Jochs im oberen Teil des Presswerkzeugs, da hierbei die Möglichkeit besteht, auch dickwandige Bauteile oder dreidimensional gekrümmte Bauteile homogen zu verkleben, bei denen der Abstand zwischen Klebefuge und Induktor also sehr groß oder sogar unterschiedlich ausfällt.

Somit belegen die vorstehend beschriebenen exemplarischen Versuche die hervorragende Eignung des erfindungsgemäßen Verfahrens um belastbare Verklebungen auch in elektronischen Geräten auf schonende Weise zu erzeugen.

## Patentansprüche

1. Verfahren zum Verkleben eines hitzeaktiviert verklebbaren Flächenelements mit einem Verklebungssubstrat, das einen Wärmeleitungskoeffizienten von höchstens 5 W/mK aufweist, das Verfahren umfassend die folgenden Schritte:
ein hitzeaktiviert verklebbares Flächenelement mit zumindest einer elektrisch leitenden Schicht und zumindest einer hitzeaktiviert verklebenden Klebemassenschicht wird bereit gestellt, dessen Form auf die Form der Verklebungsfläche zugeschnitten ist,
das Verklebungssubstrat wird mit einem Seitenflächenabschnitt des hitzeaktiviert verklebbaren Flächenelements in Kontakt gebracht und so ein Vorverbund gebildet,
der Vorverbund wird in einem Magnet-Wechselfeld einer Frequenz von mindestens 100 Hz und höchstens 200 kHz für eine Dauer von höchstens 20 s induktiv erwärmt und so ein Endverbund gebildet,
**dadurch gekennzeichnet, dass**
der Vorverbund gleichzeitig mit dem induktiven Erwärmen senkrecht zu einem Seitenflächenabschnitt des hitzeaktiviert verklebbaren Flächenelements mit einem Druck von mindestens 1 MPa beaufschlagt wird, insbesondere von mindestens 3 MPa.

2. Verfahren nach Anspruch 1, **dadurch gekennzeichnet, dass** als das hitzeaktiviert verklebbare Flächenelement ein Flächenelement bereit gestellt wird, das eine weitere hitzeaktiviert verklebende Klebemassenschicht aufweist, und dass der Vorverbund vor dem induktiven Erwärmen mit einem weiteren Verklebungssubstrat in Kontakt gebracht wird, indem die weitere hitzeaktiviert verklebende Klebemassenschicht des hitzeaktiviert verklebbaren Flächenelements des Vorverbunds mit dem weiteren Verklebungssubstrat in Kontakt gebracht wird.

3. Verfahren nach Anspruch 1 oder Anspruch 2, **dadurch gekennzeichnet, dass** als das hitzeaktiviert verklebbare Flächenelement ein Flächenelement bereit gestellt wird, bei dem als die zumindest eine elektrisch leitende Schicht eine Schicht mit einer Schichtdicke von weniger als 75 µm verwendet wird, insbesondere von weniger als 30 µm oder sogar von weniger als 15 µm.

4. Verfahren nach einem der Ansprüche 1 bis 3, **dadurch gekennzeichnet, dass** als das hitzeaktiviert verklebbare Flächenelement ein Flächenelement bereit gestellt wird, dessen Form für eine offene Verklebungsflächengeometrie angepasst ist.

5. Verfahren nach einem der Ansprüche 1 bis 4, **dadurch gekennzeichnet, dass** als das hitzeaktiviert verklebbare Flächenelement ein Flächenelement mit einer minimalen Stegbreite von weniger als 5 mm bereit gestellt wird, insbesondere von weniger als 3 mm oder sogar von weniger als 2 mm.

6. Verfahren nach einem der Ansprüche 1 bis 5, **dadurch gekennzeichnet, dass** als das Verklebungssubstrat ein Verklebungssubstrat verwendet wird, das eine im dreidimensionalen Raum gewölbte Verklebungsfläche aufweist.

7. Verfahren nach einem der Ansprüche 1 bis 6, **dadurch gekennzeichnet, dass** der Druck auch nach Beendigung des induktiven Erwärmens für eine Nachpressdauer aufrecht erhalten wird, wobei der Endverbund während zumindest eines Teils der Nachpressdauer erneut induktiv erwärmt wird.

8. Verfahren nach einem der Ansprüche 1 bis 7, **dadurch gekennzeichnet, dass** die Aufheizgeschwindigkeit beim induktiven Erwärmen mindestens 2,5 °C/s und höchstens 200 °C/s beträgt, insbesondere mindestens 10 °C/s und höchstens 100 °C/s.

9. Verfahren nach einem der Ansprüche 1 bis 8, **dadurch gekennzeichnet, dass** das Verhältnis der Fläche des jeweils gleichzeitig induktiv erwärmten Bereichs des hitzeaktiviert verklebbaren Flächenelements zu der Verklebungsfläche in diesem Bereich weniger als 2 : 1 beträgt, insbesondere weniger als 1,5 : 1 oder sogar weniger als 1,2 : 1.

10. Verfahren nach einem der Ansprüche 1 bis 9, **dadurch gekennzeichnet, dass** das - induktive Erwärmen und das Beaufschlagen mit Druck mittels einer Vorrichtung mit zumindest einem Pressstempelelement durchgeführt wird, das ein Induktionsheizungsmittel aufweist.

11. Verfahren nach einem der Ansprüche 1 bis 10 zum Verkleben von Baueinheiten elektronischer Geräte.

## Claims

1. Method for adhesively bonding a heat-activatedly bondable sheetlike element to a bond substrate which has a thermal conductivity coefficient of at most 5 W/mK, the method comprising the following steps:
a heat-activatedly bondable sheetlike element having at least one electrically conducting layer and at least one heat-activatedly bonding adhesive layer is provided, its shape cut to the shape of the bond area,
the bond substrate is contacted with a side-face section of the heat-activatedly bondable sheetlike element, to form a preliminary assembly,
the preliminary assembly is subjected to inductive heating in an alternating magnetic field with a frequency of at least 100 Hz and at most 200 kHz for a duration of at most 20 s, to form a final assembly,
**characterized in that**
simultaneously with the inductive heating, the preliminary assembly is subjected, perpendicularly to a side-face section of the heat-activatedly bondable sheetlike element, to a pressure of at least 1 MPa, more particularly of at least 3 MPa.

2. Method according to Claim 1, **characterized in that** provided as the heat-activatedly bondable sheetlike element is a sheetlike element which has a further heat-activatedly bonding adhesive layer, and **in that** the preliminary assembly, prior to the inductive heating, is contacted with a further bond substrate, the further heat-activatedly bonding adhesive layer of the heat-activatedly bondable sheetlike element of the preliminary assembly being contacted with the further bond substrate.

3. Method according to Claim 1 or 2, **characterized in that** provided as the heat-activatedly bondable sheetlike element is a sheetlike element in which use is made as the at least one electrically conducting layer of a layer having a layer thickness of less than 75 µm, more particularly of less than 30 µm or even of less than 15 µm.

4. Method according to any of Claims 1 to 3, **characterized in that** provided as the heat-activatedly bondable sheetlike element is a sheetlike element whose shape is adapted for an open bond area geometry.

5. Method according to any of Claims 1 to 4, **characterized in that** provided as the heat-activatedly bondable sheetlike element is a sheetlike element having a minimum strut width of less than 5 mm, more particularly of less than 3 mm or even of less than 2 mm.

6. Method according to any of Claims 1 to 5, **characterized in that** use is made as the bond substrate of a bond substrate which has a bond area curved in three-dimensional space.

7. Method according to any of Claims 1 to 6, **characterized in that** even after the end of the inductive heating, the pressure is maintained for a subsequent pressing duration, the final assembly being subjected to further inductive heating during at least part of the subsequent pressing duration.

8. Method according to any of Claims 1 to 7, **characterized in that** the heating rate for the inductive heating is at least 2.5°C/s and at most 200°C/s, more particularly at least 10°C/s and at most 100°C/s.

9. Method according to any of Claims 1 to 8, **characterized in that** the ratio of the area of each simultaneously inductively heated region of the heat-activatedly bondable sheetlike element to the bond area **in that** region is less than 2:1, more particularly less than 1.5:1 or even less than 1.2:1.

10. Method according to any of Claims 1 to 9, **characterized in that** the inductive heating and the subjection to pressure are carried out by means of a device having at least one press-ram element which has an induction heating means.

11. Method according to any of Claims 1 to 10 for adhesively bonding subassemblies of electronic devices.

## Revendications

1. Procédé pour coller un élément plat pouvant être collé par activation thermique sur un substrat de collage qui présente un coefficient de conductivité thermique d'au plus 5 W/mK, le procédé comprenant les étapes suivantes :
un élément plat pouvant être collé par activation thermique, présentant au moins une couche électriquement conductrice et au moins une couche de masse adhésive collant par activation thermique est mis à disposition, dont la forme est adaptée à la forme de la surface de collage,
le substrat de collage est mis en contact avec une section de face latérale de l'élément plat pouvant être collé par activation thermique et forme ainsi un précomposite,
le précomposite est chauffé par induction dans un champ magnétique alternatif d'une fréquence d'au moins 100 Hz et d'au plus 200 kHz pendant une durée d'au plus 20 s et forme ainsi une composite fini,
**caractérisé en ce que** le précomposite est sollicité, simultanément avec le chauffage par induction perpendiculairement à une section de face latérale de l'élément plat pouvant être collé par activation thermique, par une pression d'au moins 1 MPa, en particulier d'au moins 3 MPa.

2. Procédé selon la revendication 1, **caractérisé en ce que**, comme élément plat pouvant être collé par activation thermique, un élément plat qui présente une autre couche de masse adhésive collant par activation thermique est mis à disposition et **en ce que** le précomposite est mis en contact, avant le chauffage par induction, avec un autre substrat de collage, **en ce que** l'autre couche de masse adhésive collant par activation thermique de l'élément plat pouvant être collé par activation thermique de précomposite est mis en contact avec l'autre substrat de collage.

3. Procédé selon la revendication 1 ou la revendication 2, **caractérisé en ce que**, comme élément plat pouvant être collé par activation thermique, un élément plat est mis à disposition dans lequel on utilise, comme l'au moins une couche électriquement conductrice, une couche présentant une épaisseur de couche inférieure à 75 µm, en particulier inférieure à 30 µm ou même inférieure à 15 µm.

4. Procédé selon l'une quelconque des revendications 1 à 3, **caractérisé en ce que**, comme élément plat pouvant être collé par activation thermique, un élément plat est mis à disposition, dont la forme est conçue pour une géométrie de surface de collage ouverte.

5. Procédé selon l'une quelconque des revendications 1 à 4, **caractérisé en ce que**, comme élément plat pouvant être collé par activation thermique, un élément plat présentant une largeur d'âme minimale inférieure à 5 mm, en particulier inférieure à 3 mm et même inférieure à 2 mm est mis à disposition.

6. Procédé selon l'une quelconque des revendications 1 à 5, **caractérisé en ce qu'**on utilise, comme substrat de collage, un substrat de collage qui présente une surface de collage incurvée dans un espace tridimensionnel.

7. Procédé selon l'une quelconque des revendications 1 à 6, **caractérisé en ce que** la pression est également maintenue après la fin du chauffage par induction pendant une durée de post-pression, le composite final étant à nouveau chauffé par induction pendant au moins une partie de la durée de post-pression.

8. Procédé selon l'une quelconque des revendications 1 à 7, **caractérisé en ce que** la vitesse de chauffage lors du chauffage par induction est d'au moins 2,5°C/s et d'au plus 200°C/s, en particulier d'au moins 10°C/s et d'au plus 100°C/s.

9. Procédé selon l'une quelconque des revendications 1 à 8, **caractérisé en ce que** le rapport de la surface de la zone à chaque fois chauffée simultanément par induction de l'élément plat pouvant être collé par activation thermique à la surface de collage dans cette zone est inférieur à 2:1, en particulier inférieur à 1,5:1 et même inférieur à 1,2:1.

10. Procédé selon l'une quelconque des revendications 1 à 9, **caractérisé en ce que** le chauffage par induction et la sollicitation par la pression sont réalisés au moyen d'un dispositif présentant au moins un élément à piston de presse, qui présente un moyen de chauffage par induction.

11. Procédé selon l'une quelconque des revendications 1 à 10 pour coller des modules d'appareils électroniques.
